# EUROPÄISCHE PATENTSCHRIFT

(11) **EP 3 033 646 B1**
(45) Veröffentlichungstag und Bekanntmachung des Hinweises auf die Patenterteilung: **25.09.2024**
(21) Anmeldenummer: 14744023.4
(22) Anmeldetag: 18.07.2014
(51) Int. Cl.: G02B 21/00, G02B 6/06

(54) **HOCHAUFLÖSENDE SCANNING-MIKROSKOPIE**
HIGH-RESOLUTION SCANNING MICROSCOPY
MICROSCOPIE À BALAYAGE HAUTE RÉSOLUTION

(30) Priorität: 15.08.2013 DE 102013013793; 15.11.2013 DE 102013019348
(43) Veröffentlichungstag der Anmeldung: 22.06.2016
(73) Patentinhaber: Carl Zeiss Microscopy GmbH, 07745 Jena (DE)
(72) Erfinder: KLEPPE, Ingo, 07749 Jena (DE); NOVIKAU, Yauheni, 99510 Apolda (DE); NETZ, Ralf, 07745 Jena (DE); GÖLLES, Michael, 07745 Jena (DE); LORENZ, Gunther, 07743 Jena (DE); NIETEN, Christoph, 07745 Jena (DE)
(74) Vertreter: Loritz, Rainer
(86) Internationale Anmeldenummer: PCT/EP2014/065502
(87) Internationale Veröffentlichungsnummer: WO 2015/022147

(56) Entgegenhaltungen:
- WO-A1-2013/135487
- US-A1- 2007 057 211
- US-A1- 2012 019 821
- US-A1- 2013 135 715
- P. SARDER ET AL: "Deconvolution methods for 3-D fluorescence microscopy images", IEEE SIGNAL PROCESSING MAGAZINE, vol. 23, no. 3, May 2006 (2006-05-01), pages 32 - 45, XP055004884, ISSN: 1053-5888, DOI: 10.1109/MSP.2006.1628876

## Beschreibung

Die Erfindung bezieht sich auf ein Mikroskop zur hochauflösenden Scanning-Mikroskopie einer Probe, mit einer Beleuchtungseinrichtung zum Beleuchten der Probe, einer Abbildungseinrichtung zum Scannen eines Punkt- oder Linien-Spots über die Probe und zum Abbilden des Punkt- oder Linien-Spots in ein beugungsbegrenztes, ruhendes Einzelbild in eine Detektionsebene, einer Detektoreinrichtung zum Erfassen des Einzelbildes in der Detektionsebene für verschiedene Scanpositionen mit einer Ortauflösung, einer Auswerteeinrichtung zum Auswerten einer Beugungsstruktur des Einzelbildes für die Scanpositionen aus Daten der Detektoreinrichtung und zum Erzeugen eines Bildes der Probe, das eine Auflösung aufweist, die über die Beugungsgrenze gesteigert ist. Die Erfindung bezieht sich weiter auf ein Verfahren zur hochauflösenden Scanning-Mikroskopie einer Probe, bei dem die Probe beleuchtet wird, ein scannend über die Probe geführter Punkt- oder Linien-Spot in ein Einzelbild abgebildet wird, wobei der Spot beugungsbegrenzt in das Einzelbild abgebildet wird und das Einzelbild ruhend in einer Detektionsebene liegt, für verschiedene Scanpositionen das Einzelbild mit einer Ortauflösung erfaßt wird, so daß eine Beugungsstruktur des Einzelbildes erfaßt wird, für jede Scanposition die Beugungsstruktur des Einzelbildes ausgewertet wird und ein Bild der Probe erzeugt wird, das eine Auflösung aufweist, die über die Beugungsgrenze gesteigert ist.

Ein solches Mikroskop bzw. Mikroskopieverfahren ist beispielsweise aus der Veröffentlichung C. Müller und J. Enderlein, Physical Review Letters, 104, 198101 (2010), oder der EP 2317362 A1 bekannt, die auch weitere Nachweise zum Stand der Technik aufführt.

Dieser Ansatz erreicht eine Auflösungserhöhung, indem ein Spot beugungsbegrenzt auf eine Detektionsebene abgebildet wird. Die beugungsbegrenzte Abbildung bildet einen Punkt-Spot als Airy-Scheibe ab. Diese Beugungsscheibe wird in der Detektionsebene so erfaßt, daß ihre Struktur aufgelöst werden kann. Bezogen auf die Abbildungsleistung des Mikroskops erfolgt somit detektorseitig eine Überabtastung. Bei der Abbildung eines Punkt-Spots wird die Form der Airy-Scheibe aufgelöst. Durch geeignete Auswertung der Beugungsstruktur, die in den genannten Schriften geschildert ist erreicht man eine Auflösungssteigerung um den Faktor 2 über die Beugungsgrenze.

Detektionsseitig ist es dabei jedoch unvermeidlich, daß für jeden Punkt, der auf der Probe in dieser Weise abgetastet wird, verglichen mit einem herkömmlichen Laser-Scanning-Mikroskop (nachfolgend auch als LSM abgekürzt) ein Einzelbild mit einem Vielfachen an Bildinformation aufgenommen werden muß. Erfaßt man die Struktur des Einzelbildes des Spots beispielsweise mit 16 Pixeln, hat man pro Spot nicht nur die 16-fache Datenmenge, ein einzelnes Pixel enthält auch im Mittel nur ein 1/16 der Strahlungsintensität, die bei einer üblichen Pinhole-Detektion auf den Detektor eines LSM fallen würde. Da die Strahlungsintensität über die Struktur des Einzelbildes, beispielsweise die Airy-Scheibe, natürlich nicht gleichmäßig verteilt ist, fällt am Rande dieser Struktur tatsächlich sogar noch bedeutend weniger Strahlungsintensität an, als der Mittelwert von 1/n bei n-Pixeln.

Man steht also vor der Aufgabe, detektorseitig Strahlungsmengen hochauflösend erfassen zu können. Herkömmliche CCD-Arrays, die üblicherweise in der Mikroskopie eingesetzt werden, erreichen kein hinreichendes Signal/Rausch-Verhältnis, so daß selbst eine Verlängerung der Bildaufnahmedauer, die per se schon als nachteilig in der Anwendung wäre, nicht weiterhelfen würde. APD-Arrays sind auch mit einem zu hohen Dunkelrauschen behaftet, so daß auch eine Verlängerung der Meßdauer in einem unzureichenden Signal/Rausch-Verhältnis resultieren würde. Gleiches gilt für CMOS-Detektoren, die zudem hinsichtlich der Detektorelementgröße nachteilig sind, da das beugungsbegrenzte Einzelbild des Spots auf zu wenige Pixel fallen würde. Ähnliche Bauraumprobleme bringen PMT-Arrays mit sich; die Pixel sind dort ebenfalls zu groß. Die Bauraumprobleme ruhen insbesondere daher, daß eine Realisierung eines Mikroskops zur Hochauflösung vom Entwicklungsaufwand wie von der Geräteverbreitung nur realisierbar ist, wenn eine Integration in bestehende LSM-Konstruktionen möglich ist. Hier sind jedoch bestimmte Größen des Einzelbildes vorgegeben. Ein flächenmäßig größerer Detektor könnte nur dann eingebracht werden, wenn zusätzlich eine Optik vorgesehen wird, die das Bild noch einmal signifikant, d. h. um mehrere Größenordnungen aufweitet. Eine solche Optik gestaltet sich, will man die beugungsbegrenzte Struktur ohne weitere Abbildungsfehler erhalten, als sehr aufwendig.

Es sind im Stand der Technik andere Verfahren bekannt, welche die geschilderten detektionsseitigen Probleme bei der Hochauflösung vermeiden. So ist beispielsweise in der EP 1157297 B1 ein Verfahren angesprochen, bei dem mittels strukturierter Beleuchtung nicht linearer Prozesse ausgenützt werden. Eine strukturierte Beleuchtung wird in mehreren Dreh- und Ortslagen über die Probe verschoben und die Probe in diesen unterschiedlichen Zuständen auf einen Weitfelddetektor abgebildet, für den die geschilderten Beschränkungen nicht bestehen.

Ein Verfahren, das ohne die geschilderten Detektoreinschränkungen ebenfalls eine Hochauflösung (also eine Auflösung eines Probenbildes jenseits der Beugungsgrenze) erreicht, ist aus der WO 2006127692 und der DE 102006021317 bekannt. Dieses mit PALM abgekürzte Verfahren verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden; nicht aktivierte Moleküle senden auch nach Einstrahlung von Anregungsstrahlung keine Fluoreszenzstrahlung aus. Die Aktivierungsstrahlung schaltet die Aktivierungssubstanz also in einen Zustand, in dem sie zur Fluoreszenz anregbar ist. Man spricht deshalb allgemein von einem Umschaltsignal. Dieses wird nun so aufgebracht, daß zumindest ein gewisser Anteil der aktivierten Markierungsmoleküle von benachbarten, ebenfalls aktivierten Markierungsmolekülen so beabstandet ist, daß die aktivierten Markierungsmoleküle gemessen an der optischen Auflösung der Mikroskopie getrennt oder nachträglich trennbar sind. Man spricht von Isolierung der aktivierten Moleküle. Für diese isolierten Moleküle ist es einfach, das Zentrum deren auflösungsbegrenzt bedingter Strahlungsverteilung zu ermitteln und somit rechnerisch die Lage der Moleküle mit höherer Genauigkeit zu bestimmen, als es die optische Abbildung eigentlich zuläßt. Zum Abbilden der gesamten Probe benutzt das PALM-Verfahren die Tatsache, daß die Wahrscheinlichkeit, mit der ein Markierungsmolekül durch das Umschaltsignal bei gegebener Intensität des Umschaltsignals aktiviert wird, für alle Markierungsmoleküle gleich ist. Die Intensität des Umschaltsignals wird also so aufgebracht, daß die gewünschte Isolierung erfolgt. Diese Verfahrensschritte werden so lange wiederholt, bis möglichst alle Markierungsmoleküle einmal in einer Teilmenge, die zur Fluoreszenz angeregt wurde, enthalten waren.

Im Rahmen der Erfindung wird der auf der Probe abgetastete Spot ruhend in eine Detektionsebene abgebildet. Die Strahlung aus der Detektionsebene wird dann nicht-abbildend umverteilt und auf das Detektorarray geleitet. Der Begriff "nicht-abbildend" ist dabei auf das in der Detektionsebene vorhandene Einzelbild bezogen. Einzelne Flächenbereiche dieses Einzelbildes können natürlich dennoch gemäß den Abbildungsgesetzen abgebildet werden. Insofern kann zwischen Detektorarray und Umverteilungselement durchaus abbildende Optik liegen. Das in der Detektionsebene vorliegende Einzelbild bleibt jedoch bei der Umverteilung als solches nicht erhalten.

Der Begriff "beugungsbegrenzt" soll nicht auf die Beugungsgrenze gemäß der Abbe'schen Theorie beschränkt sein, sondern auch Fälle erfassen, in denen auf Grund realer Unzulänglichkeiten oder Einschränkungen das theoretische Maximum um 20 % verfehlt wird. Auch dann hat das Einzelbild eine Struktur, die hier als Beugungsstruktur bezeichnet wird. Sie wird überabgetastet.

Dieses Prinzip ermöglicht es, ein Detektorarray zu verwenden, das in seiner Größe nicht zum Einzelbild paßt. Das Detektorarray ist vorteilhaft in mindestens einer Ausdehnung größer oder kleiner als das zu erfassende Einzelbild. Unter den Begriff der unterschiedlichen geometrischen Ausbildung fallen sowohl eine unterschiedliche Ausdehnung des Detektorarrays als auch eine Anordnung mit unterschiedlichen Aspektverhältnis bezogen auf Höhe und Breite der Ausdehnung des Einzelbildes in der Detektionsebene. Die Pixel des Detektorarrays können zusätzlich für die erforderliche Auflösung zu groß sein. Auch ist es nun zulässig, daß der Umriß der Pixelanordnung des Detektorarrays grundlegend anders ist, als der Umriß, den das Einzelbild in der Detektionsebene hat. Letztlich hat das Detektorarray gemäß dem der Erfindung zugrundeliegenden Prinzip eine andere Größe als das Einzelbild in der Detektionsebene. Die Umverteilung im Verfahren bzw. das Umverteilungselement im Mikroskop ermöglichen es, ein Detektorarray zu wählen, ohne die Abmessungseinschränkungen und Pixelgrößeneinschränkungen beachten zu müssen, welche durch das Einzelbild und dessen Größe entstehen. Insbesondere kann als Detektorarray eine Detektorzeile verwendet werden.

Das Bild der Probe entsteht LSM-üblich durch Abtasten der Probe mit dem Spot aus einer Vielzahl von Einzelbildern, die jeweils einem anderen Abtastort, also einer anderen Scanposition, zugeordnet sind.

Das Konzept gemäß dem der Erfindung zugrundeliegenden Prinzip kann auch in parallelisierter Form für mehrere Spots gleichzeitig durchgeführt werden, wie dies für die Laserscanningmikroskopie bekannt ist. Es werden dann mehrere Spots auf der Probe scannend abgetastet, und die Einzelbilder der mehreren Spots liegen ruhend in der Detektionsebene nebeneinander. Sie werden dann entweder von einem gemeinsamen Umverteilungselement, das flächenmäßig entsprechend groß ist bzw. von mehreren einzelnen Umverteilungselementen umverteilt und dann auf ein entsprechend größeres einzelnes oder mehrere einzelne Detektorarrays geleitet.

Die nachfolgende Beschreibung konzentriert sich exemplarisch auf die Abtastung mit einem einzelnen Punkt-Spot. Dies soll jedoch nicht als Einschränkung verstanden werden, und die erläuterten Merkmale und Grundsätze gelten sinngemäß auch für die parallel Abtastung mehrerer Punkt-Spots wie auch für die Verwendung eines Linienspots. Letzterer ist natürlich nur quer zur Linienerstreckung beugungsbegrenzt, so daß die diesbezüglichen Merkmale dieser Beschreibung dann nur in einer Richtung (quer zur Linienerstreckung) gelten.

Durch das Vorgehen gemäß dem der Erfindung zugrundeliegenden Prinzip kann das ISM-Verfahren bei zufriedenstellender Geschwindigkeit und mit vertretbarem apparativen Aufwand ausgeführt werden. Das der Erfindung zugrundeliegende Prinzip eröffnet für ein hochauflösendes Mikroskopieprinzip ein breites Anwendungsfeld, das so bislang nicht gegeben war.

Eine erfindungsgemäße Möglichkeit der Umverteilung bzw. das Umverteilungselement zu realisieren besteht darin, ein Bündel aus Lichtleitfasern zu verwenden. Diese können vorzugsweise als Multimode-Lichtleitfasern ausgeführt werden. Das Bündel hat einen Eingang, der in der Detektionsebene angeordnet ist und in seinem Umriß den Ausdehnungen des beugungsbegrenzten Einzelbildes in der Detektionsebene genügt. Am Ausgang sind die Lichtleitfasern hingegen in der geometrischen Anordnung angeordnet, welche durch das Detektorarray vorgegeben ist, und welche sich von der des Eingangs unterscheidet. Die ausgangsseitigen Enden der Lichtleitfasern können dabei direkt auf die Pixel des Detektorarrays geführt werden. Besonders vorteilhaft ist es, wenn der Ausgang des Bündels in einem Stecker zusammengefaßt ist, der bequem auf eine Detektorzeile, beispielsweise eine APD- oder PMT-Zeile aufgesteckt werden kann.

Für das Verständnis des der Erfindung zugrundeliegenden Prinzips ist es wichtig, zwischen den Pixeln des Detektorarrays und Bildpixeln zu unterscheiden, mit denen das Einzelbild in der Detektionsebene aufgelöst wird. Jedes Bildpixel ist i. d. R. genau einem Pixel des Detektorarrays zugeordnet; hinsichtlich ihrer Anordnung sind die beiden aber unterschiedlich. Kennzeichnend für das der Erfindung zugrundeliegende Prinzip ist es unter anderem, daß in der Detektionsebene die Strahlung an Bildpixeln aufgenommen wird, welche hinsichtlich ihrer Größe und Anordnung eine Überabtastung des Einzelbildes bewirken. Auf diese Weise wird die Struktur des Einzelbildes aufgelöst, die aufgrund der beugungsbegrenzten Erzeugung des Einzelbildes eine Beugungsstruktur ist. Das Umverteilungselement hat eine Eingangsseite, an der diese Bildpixel vorgesehen sind. Die Eingangsseite liegt in der Detektionsebene. Das Umverteilungselement leitet die Strahlung an jedem Bildpixel zu einem der Pixel des Detektorarrays. Die Zuordnung von Bildpixeln zu Pixeln des Detektorarrays hält die Bildstruktur nicht aufrecht, weshalb die Umverteilung bezogen auf das Einzelbild nicht-abbildend ist. Das der Erfindung zugrundeliegende Prinzip könnte also auch dadurch charakterisiert werden, daß in einem gattungsgemäßen Mikroskop die Detektoreinrichtung ein nicht-abbildendes Umverteilungselement aufweist, das eine in der Detektionsebene liegende Eingangsseite aufweist, an der die Strahlung mit Bildpixeln aufgenommen wird. Das Umverteilungselement weist weiter eine Ausgangsseite auf, an der die an den Bildpixeln aufgenommene Strahlung Pixeln eines Detektorarrays zugeführt wird, wobei die Strahlung von der Eingangsseite zur Ausgangsseite bezogen auf das Einzelbild nicht-abbildend umverteilt ist. Analog könnte das Verfahren gemäß dem der Erfindung zugrundeliegenden Prinzip dadurch charakterisiert werden, daß bei einem gattungsgemäßen Verfahren die Strahlung in der Detektionsebene mit Bildpixeln aufgenommen wird, die bezogen auf das Einzelbild nicht-abbildend auf Pixel des Detektorarrays umverteilt werden. Das Detektorarrays unterscheidet sich hinsichtlich Anordnung und/Größe seiner Pixel von der Anordnung und/oder Größe der Bildpixel in der Detektionsebene. Weiter sind die Bildpixel in der Detektionsebene vom Umverteilungselement so bereitgestellt, daß bezogen auf die Beugungsgrenze die Beugungsstruktur des Einzelbildes überabgetastet ist.

Bei hochempfindlichen Detektorarrays ist es bekannt, daß benachbarte Pixel bei hohen Strahlungsintensitätsunterschieden eine Störung durch Übersprechen zeigt. Um solches zu vermeiden, ist eine Weiterbildung bevorzugt, bei der die Lichtleitfasern so vom Eingang zum Ausgang geführt sind, daß am Ausgang benachbarte Lichtleitfasern auch am Eingang benachbart sind. Da das beugungsbegrenzte Einzelbild keine sprungartigen Strahlungsintensitätsänderungen zeigt, stellt eine derartige Ausgestaltung des Umverteilungselementes automatisch sicher, daß nebeneinanderliegende Pixel des Detektorarrays möglichst geringe Strahlungsintensitätsunterschiede erhalten, was das Übersprechen minimiert.

Bei LSM werden je nach erwünschter Auflösung unterschiedliche Objektive verwendet. Der Wechsel eines Objektivs verändert die Ausdehnung eines Einzelbildes in der Detektionsebene. Es ist deshalb bevorzugt, der Detektionsebene in Abbildungsrichtung eine Zoomoptik zur Anpassung der Größe des Einzelbildes an die der Detektoreinrichtung vorzuordnen. Eine solche Zoomoptik variiert die Größe des Einzelbildes in einem Prozentbereich deutlich kleiner 100 %, ist also sehr viel einfacher auszuführen, als eine Vervielfachung der Größe des Einzelbildes, die eingangs als nachteilig geschildert wurde.

Die Beleuchtung der Probe erfolgt bevorzugt wie in einem üblichen LSM ebenfalls scannend, obwohl dies nicht zwingend ist. Man erreicht dann allerdings die maximale Auflösungssteigerung. Beleuchtet man die Probe scannend, ist es zweckmäßig, daß die Beleuchtungseinrichtung und die Abbildungseinrichtung eine gemeinsame Scaneinrichtung haben, welche einen Beleuchtungsspot über die Probe führt und zugleich den mit dem Beleuchtungsspot zusammenfallenden Spot, an dem die Probe abgebildet wird, in Bezug auf den Detektor wieder descannt, so daß das Einzelbild ruhend in der Detektionsebene ist. Bei einem solchen Aufbau kann man die Zoomoptik in dem gemeinsamen Teil von Beleuchtungs- und Abbildungseinrichtung setzen. Sie erlaubt es dann nicht nur, die Anpassung des Einzelbildes an die Größe des Detektors in der Detektionsebene vorzunehmen, sondern erlaubt auch zusätzlich die verfügbare Beleuchtungsstrahlung ohne Randverluste vollständig in die Objektivpupille, welche sich mit Wahl des Objektives ändern kann, einzukoppeln.

Ein strahlungsintensitätabhängiges Übersprechen zwischen nebeneinanderliegenden Pixeln des Detektorarrays kann, wie bereits eingangs erwähnt, bei Umverteilung mittels Lichtleitfaserbündel durch geeignete Anordnung der Lichtleitfasern im Bündel reduziert werden. Zusätzlich oder alternativ ist es auch möglich, eine Kalibrierung durchzuführen. Dazu wird jede Lichtleitfaser nacheinander mit Strahlung beaufschlagt und das Störsignal in benachbarten Pixeln erfaßt. Auf diese Weise wird eine Kalibriermatrix aufgestellt, mit der bei der späteren Mikroskopie der Probe ein strahlungsintensitätsabhängiges Übersprechen nebeneinanderliegender Pixel korrigiert wird.

Die Auflösung der Beugungsstruktur des Einzelbildes erlaubt es zusätzlich, eine Bewegungsrichtung des Spots zu ermitteln, entlang dieser während des Abtastens der Probe verschoben wird. Diese Bewegungsrichtung ist zwar grundsätzlich aus der Mechanik des Scanners (beispielsweise eines Scanspiegels oder eines beweglichen Probentisches) bekannt, jedoch ergeben sich hier mechanisch bedingte Restungenauigkeiten. Diese können eliminiert werden, indem Signale einzelner Pixel des Detektorarrays mittels Kreuzkorrelation ausgewertet werden. Dabei macht man sich zunutze, daß sich, bezogen nebeneinanderliegende Bildpixel in der Probe aufgrund der beugungsbegrenzten Abbildung des Spots in einem gewissen Maß überlappen, ihre Zentren jedoch nebeneinander liegen. Unterzieht man die Signale solcher Bildpixel einer Kreuzkorrelation, kann man eine Restungenauigkeit, welche aufgrund unvermeidlicher Toleranzen der Scanmechanik verbleibt, reduzieren bzw. vollständig eliminieren.

Neben der erhöhten Auflösung läßt sich über die räumliche und zeitliche Korrelation der Signale aus einer Meßreihe der einzelnen Detektorelemente (die Bildpixeln in der Detektionsebene zugeordnet sind) eine zeitliche Veränderung der Fluoreszenz im vom Spot erfaßten Detektionsvolumen erfassen, z. B. können aus einer zeitlichen Korrelation wie bei der Fluoreszenzkorrelationsspektroskopie Diffusionskoeffizienten bestimmt werden und auch durch das Einbeziehen der räumlichen Korrelation zwischen Bildpixeln gerichtete Diffusion und Diffusionsbarrieren visualisiert werden. Bewegungsabläufe der Fluoreszenzmoleküle sind darüber hinaus auch für Trackinganwendungen von großem Interesse, da dort der Beleuchtungsspot der Bewegung der Fluoreszenzmoleküle folgen soll. Die hier beschriebene Anordnung erlaubt es hochgenau die Bewegungsrichtung schon innerhalb einer Pixelbeichtungszeit zu ermitteln. Es ist deshalb als Weiterbildung bevorzugt, daß Veränderungen in der Probe erfaßt werden, indem bei in der Probe ruhendem Punkt- oder Linien-Spot eine zeitliche Veränderung des beugungsbegrenzten Einzelbildes ermittelt und ausgewertet wird.

Das Vorgehen gemäß dem der Erfindung zugrundeliegenden Prinzip ermöglicht weiter bei gescannter Beleuchtung die Beleuchtungsverteilung zu modifizieren, beispielsweise mittels eines Phasenfilters. Kann damit sehr einfach das Verfahren realisiert werden, wie es beschrieben ist in Gong et al., Opt. Let., 34, 3508 (2009).

Soweit hier ein Verfahren beschrieben wird, realisiert ein Steuergerät diese Verfahrensschritte im Betrieb des Mikroskops.

Nachfolgend wird das der Erfindung zugrundeliegende Prinzip beispielsweise anhand der beigefügten Zeichnungen noch näher erläutert. Es zeigen:
- Fig. 1: eine Schemadarstellung eines Laser-Scanning-Mikroskops zur hochauflösenden Mikroskopie,
- Fig. 2: eine vergrößerte Darstellung einer Detektoreinrichtung des Mikroskops der Fig. 1;
- Fig. 3 und 4: Draufsichten auf mögliche nicht-erfindungsgemäße Ausführungsformen der Detektoreinrichtung 19 in einer Detektionsebene,
- Fig. 5: eine Weiterbildung des Mikroskops der Fig. 1 durch eine Zoom-Optik zur Anpassung der Größe des Detektorfelde,
- Fig. 6: eine Abwandlung des Mikroskops der Fig. 5 hinsichtlich der Zoom-Optik sowie hinsichtlich einer Weiterbildung zur mehrfarbigen Abbildung,
- Fig. 7: eine Abwandlung des Mikroskops der Fig. 1, wobei die Abwandlung die Detektoreinrichtung betrifft, und
- Fig. 8: eine Abwandlung der Detektoreinrichtung 19 der Fig. 7.

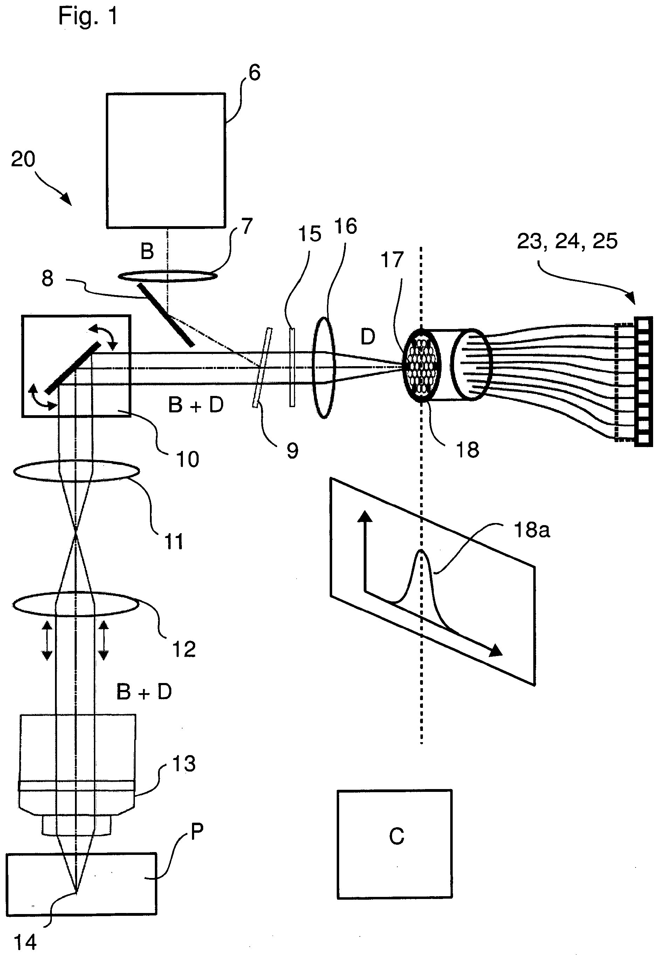

Fig. 1 zeigt schematisch ein Laserscanningmikroskop 1, das zum Mikroskopieren einer Probe 2 ausgebildet ist. Das Laserscanningmikroskop (nachfolgend als LSM abgekürzt) 1 wird von einem Steuergerät C gesteuert und umfaßt einen Beleuchtungsstrahlengang 3 sowie einen Abbildungsstrahlengang 4. Der Beleuchtungsstrahlengang beleuchtet einen Spot in der Probe 2, und der Abbildungsstrahlengang 4 bildet diesen Spot beugungsbegrenzt zur Detektion ab. Beleuchtungsstrahlengang 3 und Abbildungsstrahlengang 4 teilen sich eine Vielzahl von Elementen. Dies ist aber ebenso wenig zwingend, wie eine gescannte Spot-Beleuchtung der Probe 2. Diese könnte auch weitfeldbeleuchtet werden.

Die Beleuchtung der Probe 2 erfolgt im LSM 1 mittels eines bereitgestellten Laserstrahls 5, der über einen nicht weiter funktionell erforderlichen Umlenkspiegel 6 und eine Linse 7 auf einen Spiegel 8 eingekoppelt wird. Der Spiegel 8 sorgt dafür, daß der Laserstrahl 5 unter einem Reflexionswinkel auf einen Emissionsfilter 9 fällt. Zur übersichtlicheren Darstellung ist für den Laserstrahl 5 lediglich dessen Hauptachse eingezeichnet.

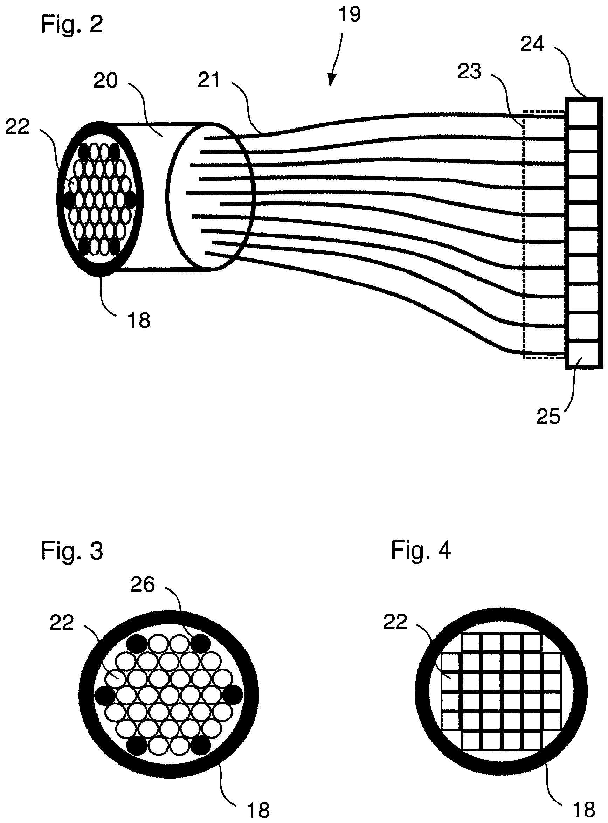

Nach Reflexion am Emissionsfilter 9 wird der Laserstrahl 5 von einem Scanner 10 zweiachsig abgelenkt und mittels Linsen 11 und 12 durch ein Objektiv 13 in einen Spot 14 in der Probe 2 fokussiert. Der Spot ist dabei in der Darstellung der Fig. 1 punktförmig, es ist jedoch auch ein linienförmiger Spot möglich. Im Spot 14 angeregte Fluoreszenzstrahlung wird über das Objektiv 13, die Linsen 11 und 12 wieder zum Scanner 10 gelangt, nachdem in Abbildungsrichtung wiederum ein ruhender Lichtstrahl vorliegt. Dieser fällt durch die Emissionsfilter 9 und 15, welche die Funktion haben, die Fluoreszenzstrahlung im Spot 14 hinsichtlich ihrer Wellenlänge zu selektieren und insbesondere von der Beleuchtungsstrahlung des Laserstrahls 5, die beispielsweise als Anregungsstrahlung dienen kann, zu trennen. Eine Linse 16 sorgt dafür, daß insgesamt der Spot 14 in ein beugungsbegrenztes Bild 17 abgebildet wird, welches in einer Detektionsebene 18 liegt. Die Detektionsebene 18 ist eine konjugierte Ebene zur Ebene, in welcher der Spot 14 in der Probe 2 liegt. Das Bild 17 des Spots 14 wird in der Detektionsebene 18 von einer Detektoreinrichtung 19 aufgenommen, die nachfolgend anhand der Figuren 2 bis 4 näher erläutert wird. Wesentlich ist hier, daß die Detektoreinrichtung 19 das beugungsbegrenzte Bild 17 des Spots 14 in der Detektionsebene 18 räumlich auflöst.

Die Intensitätsverteilung des Spots über den Detektionsquerschnitt (Gaussverteilung) in 18 ist als 18a darunter in Fig. 1 dargestellt.

Das Steuergerät C steuert alle Komponenten des LSM 1, insbesondere Scanner 10 und Detektoreinrichtung 19. Das Steuergerät nimmt für verschiedene Scanstellungen die Daten jedes einzelnen Bildes 17 auf, analysiert dessen Beugungsstruktur und erzeugt ein hochaufgelöstes Gesamtbild der Probe 2.

Das LSM 1 der Fig. 1 ist exemplarisch für einen einzigen Spot, der auf der Probe abgetastet wird, dargestellt. Es kann jedoch zugleich auch zur Abtastung gemäß einem Linien-Spot verwendet werden, der sich beispielsweise senkrecht zur Zeichnungsebene der Fig. 1 erstreckt. Auch ist es möglich, das LSM 1 der Fig. 1 so auszuführen, daß mehrere nebeneinanderliegende Punkt-Spots in der Probe abgetastet werden. Ihre entsprechenden Einzelbilder 17 liegen dann in der Detektionsebene 18 ebenfalls nebeneinander. Die Detektoreinrichtung 19 ist dann entsprechend ausgestaltet, um die nebeneinanderliegenden Einzelbilder 17 in der Detektionsebene 18 zu erfassen.

Die Detektoreinrichtung 19 ist vergrößert in Fig. 2 dargestellt. Sie besteht aus einem Lichtleitfaserbündel 20, welches ein Detektorarray 24 speist. Das Lichtleitfaserbündel 20 ist aus Einzellichtfasern 21 aufgebaut. Die Enden der Lichtleitfasern 21 bilden den Lichtleitfaserbündeleingang 22, der in der Detektionsebene 18 liegt. Die einzelnen Enden der Lichtleitfasern 21 stellen somit Pixel dar, mit denen das beugungsbegrenzte Bild 17 des Spots 14 aufgenommen wird. Da der Spot 14 in der Ausführungsform der Fig. 1 exemplarisch ein Punkt-Spot ist, ist das Bild 17 ein Airy-Scheibchen, dessen Ausdehnung innerhalb des Kreises liegt, welcher in den Figuren 1 und 2 die Detektionsebene 18 veranschaulicht. Die Ausdehnung des Lichtleitfaserbündeleingangs 22 ist also so groß, daß damit die Ausdehnung der Airy-Scheibe abgedeckt wird. Die einzelnen Lichtleitfasern 21 im Leichtleitfaserbündel 20 sind an ihren Ausgängen in eine andere geometrische Anordnung gebracht, als am Lichtleitfaserbündeleingang 22, nämlich in Form eines längserstreckten Steckers 23, in dem die ausgangsseitigen Enden der Lichtleitfasern 21 nebeneinander liegen. Der Stecker 23 ist passend zur geometrischen Anordnung der Detektorzeile 24 ausgebildet, d. h. jedes ausgangsseitige Ende einer Lichtleitfaser 21 liegt genau vor einem Pixel 25 der Detektorzeile 24.

Die geometrische Ausdehnung des Umverteilungselementes ist ganz grundsätzlich, d. h. unabhängig von seiner Realisierung, die in Fig. 4 durch ein Faserbündel erfolgt, eingangsseitig an die Ausdehnung des Einzelbildes (bzw. im Falle mehrerer Punkt-Spots der nebeneinanderliegenden Einzelbilder) angepaßt. Das Umverteilungselement hat die Funktion, aus der Detektionsebene 18 die Strahlung so aufzunehmen, daß gemessen am Abtasttheorem die Intensitätsverteilung des Einzelbildes 17 bezogen auf die Beugungsgrenze überabgetastet wird, das Umverteilungselement hat also in der Detektionsebene 18 liegende Pixel (in der Bausweise der Fig. 3 durch die Eingangsenden der Lichtleitfasern gebildet), die mindestens um den Faktor 2 kleiner sind als die kleinste auflösbare Struktur, die sich aus der Beugungsgrenze unter Berücksichtigung des Abbildungsmaßstabes in der Detektionsebene 18 ergibt.

Natürlich ist die Verwendung eines Steckers 23 nur eine von vielen Möglichkeiten, die ausgangsseitigen Enden der Lichtleitfasern 21 vor den Pixeln 25 anzuordnen. Gleichermaßen ist es möglich, andere Verbindungen zu verwenden. Auch können die einzelnen Pixel 25 direkt mit den Lichtleitfasern 21 fusioniert werden. Es ist nicht einmal erforderlich, eine Detektorzeile 24 zu verwenden; stattdessen kann für jedes Pixel 25 ein einzelner Detektor verwendet werden.

Die Figuren 3 und 4 zeigen mögliche Beispiele des Lichtleitfaserbündeleingangs 22. Die Lichtleitfasern 21 können am Lichtleitfaserbündeleingang 22 miteinander verschmolzen werden. Hierdurch wird ein höherer Füllfaktor erreicht, d. h. Lücken zwischen den einzelnen Lichtleitfasern 21 am Lichtleitfaserbündeleingang 22 werden minimiert. Das Verschmelzen führ andererseits zu einem gewissen Übersprechen zwischen benachbarten Lichtleitfasern. Möchte man dieses vermeiden, können die Lichtleitfasern geklebt werden. Auch ist eine quadratische Anordnung der Enden der Lichtleitfasern 21 möglich, wie Fig. 4 zeigt.

Bevorzugt sind die einzelnen Lichtleitfasern 21 so den einzelnen Pixeln 25 des Detektorarrays 24 zugeordnet, daß am Lichtleitfaserbündeleingang 22 nebeneinander liegende Lichtleitfasern 21 auch am Detektorarray 24 nebeneinander liegen. Durch dieses Vorgehen minimiert man Übersprechen zwischen benachbarten Pixeln 25, das beispielsweise durch Streustrahlung oder in der Signalverarbeitung der einzelnen Pixel 25 auftreten kann. Ist das Detektorarray 24 eine Zeile, kann man die entsprechende Anordnung dadurch erreichen, indem die Reihenfolge der Einzellichtleitfasern auf der Detektorzeile durch eine Spirale festgelegt wird, welche in Draufsicht auf die Detektionsebene 18 die Einzellichtleitfasern nacheinander verbindet.

Fig. 3 zeigt weiter noch Blindfasern 26, die in den Ecken der Anordnung der Lichtleitfasern 21 am Lichtleitfaserbündeleingang 22 liegen. Diese Blindfasern sind nicht auf Pixel 25 des Detektorarrays geführt. An den Orten der Blindfasern wäre keine für die Auswertung der Signale erforderliche Signalintensität mehr vorhanden. Man kann dadurch die Anzahl der Lichtleitfasern 21 und damit die Anzahl der Pixel 25 in der Detektorzeile 24 oder dem Detektorarray so reduzieren, daß beispielsweise mit 32 Pixeln gearbeitet werden kann. Solche Detektorzeilen 24 sind bereits anderweitig in Laser-Scanning-Mikroskopen im Einsatz, was den Vorteil hat, daß die Signalauswerteelektronik in solchen Laser-Scanning-Mikroskopen nur einmal vorgehalten werden muß und zwischen einer bereits bestehenden Detektorzeile 24 und der durch die Detektoreinrichtung 19 hinzugekommenen weiteren Detektorzeile 24 umgeschaltet wird.

Gemäß Fig. 4 werden Lichtleitfasern mit quadratischer Grundform für das Bündel verwendet. Sie haben ebenfalls einen hohen Abdeckungsgrad in der Detektionsebene, sammeln die Strahlung also effizient auf.

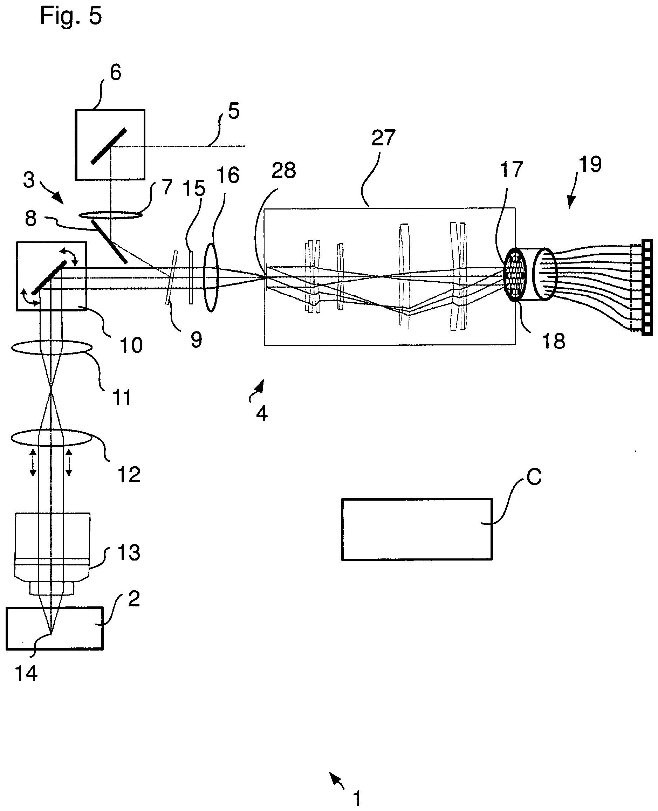

Fig. 5 zeigt eine Weiterbildung des LSM 1 der Fig. 1, in dem der Detektionsebene 18 eine Zoomoptik 27 vorgeordnet ist. Die konjugierte Ebene, in welcher bei der Bauweise der Fig. 1 die Detektionsebene 18 angeordnet wurde, bildet nun eine Zwischenbildebene 28, aus welcher die Zoomoptik 27 die Strahlung aufnimmt und zur Detektionsebene 18 leitet. Die Zoomoptik 27 erlaubt es, das Bild 17 optimal an die Ausdehnung des Eingangs der Detektoreinrichtung 19 anzupassen.

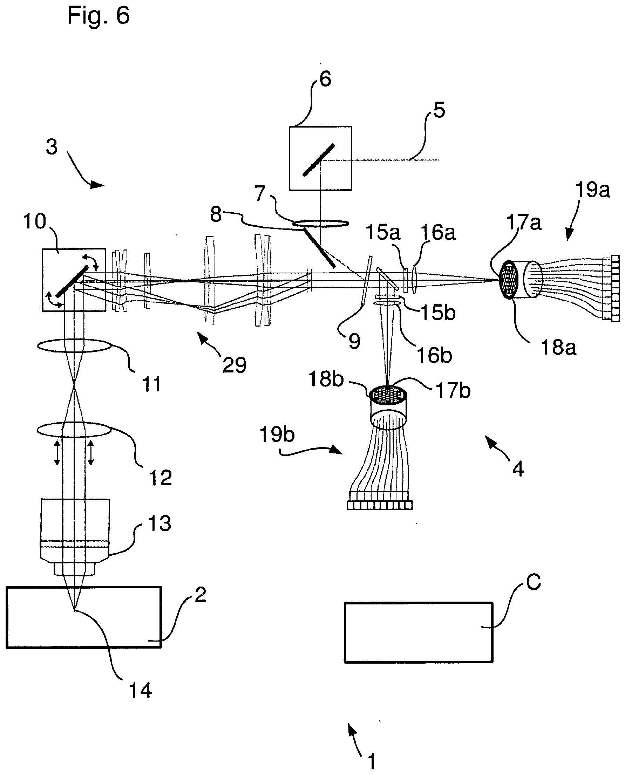

Fig. 6 zeigt eine nochmalige Abwandlung des Laser-Scanning-Mikroskops 1 der Fig. 1. Zum einen ist hier die Zoomoptik als Zoomoptik 29 so angeordnet, daß sie im Teil des Strahlenganges liegt, der sowohl vom Beleuchtungsstrahlengang 3 als auch vom Abbildungsstrahlengang 4 durchlaufen wird. Man erhält damit den Vorteil, daß nicht nur die Größe des Bildes 17 auf der Eingangsseite der Detektoreinrichtung 19 angepaßt werden kann, es kann auch bezüglich des Abbildungsstrahlenganges 4 die Pupillenfüllung des Objektivs 13 und damit die Ausnutzung des Laserstrahls 5 angepaßt werden.

Zusätzlich ist in Fig. 6 das LSM 1 noch zweikanalig ausgebildet, indem dem Emissionsfilter 9 ein Stahlteiler nachgeordnet ist, welcher die Strahlung in zwei getrennte Farbkanäle abtrennt. Die entsprechenden Elemente der Farbkanäle entsprechen jeweils den Elementen, die im LSM 1 der Fig. 1 dem Emissionsfilter 9 in Abbildungsrichtung nachgeordnet sind. Die Farbkanäle sind in der Darstellung der Fig. 6 durch das Bezugszeichensuffix "a" bzw. "b" unterschieden.

Natürlich ist die Realisierung mit zwei Farbkanälen unabhängig von der Verwendung der Zoomoptik 29. Die Kombination hat jedoch den Vorteil, daß eine Zoomoptik 27, die in beiden Farbkanälen jeweils eigenständig vorgesehen werden müßte und damit doppelt vorhanden wäre, nur einmal erforderlich ist. Selbstverständlich kann jedoch die Zoomoptik 27 auch in der Bauweise gemäß Fig. 1 zum Einsatz kommen und das LSM 1 der Fig. 6 kann auch ohne Zoomoptik 29 verwirklicht werden.

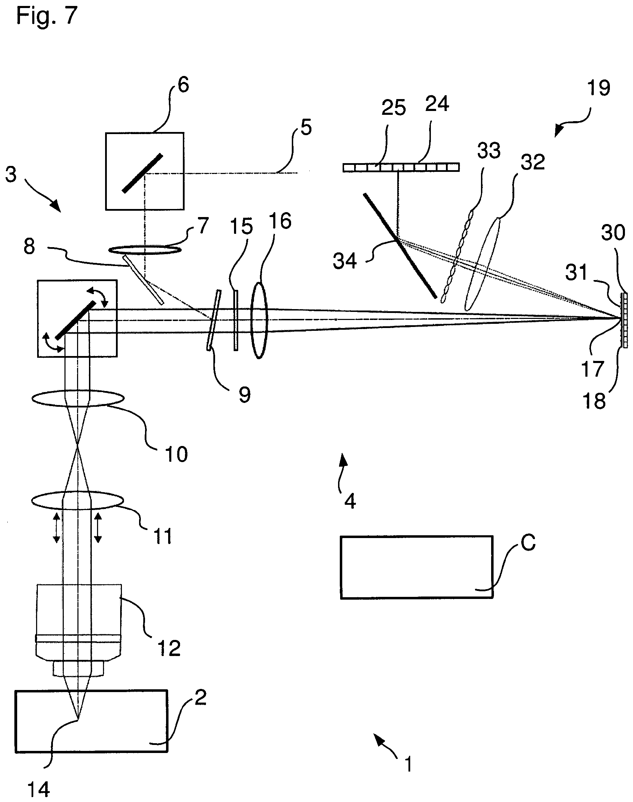

Fig. 7 zeigt eine Abwandlung des LSM 1 der Fig. 1 hinsichtlich der Detektoreinrichtung 19.

Die Detektoreinrichtung 19 weist nun einen Facettenspiegel 30 auf, der einzelne Facetten 31 trägt. Die Facetten 31 entsprechen hinsichtlich der Auflösung des Bildes 17 den Enden der Lichtleitfasern 21 am Lichtleitfaserbündeleingang 22. Die einzelnen Facetten 31 unterscheiden sich hinsichtlich ihrer Neigung zur optischen Achse des Strahlungseinfalls. Zusammen mit einer Linse 32 und einem Minilinsenarray 33 sowie einem nur der Strahlfaltung dienenden Umlenkspiegel 34 bildet jede Facette 31 einen Flächenabschnitt des Einzelbildes 17 auf ein Pixel 25 eines Detektorarrays 24 ab. Je nach Orientierung der Facetten 31 kann das Detektorarray 24 dabei bevorzugt ein 2D-Array sein, aber auch eine Detektorzeile ist möglich.

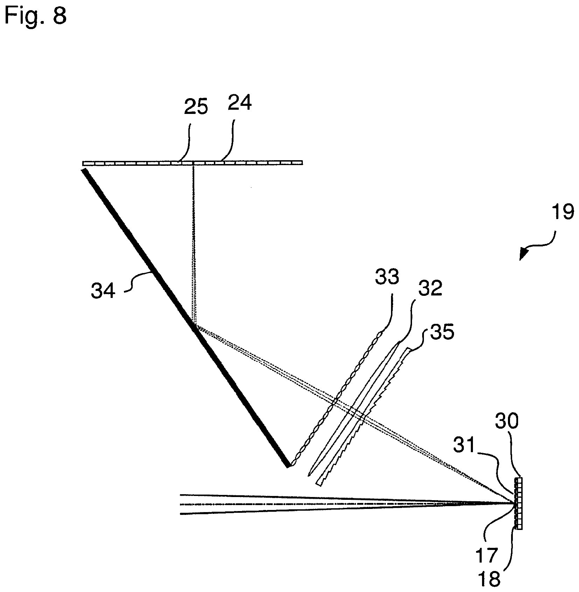

Fig. 8 zeigt eine Weiterbildung der Detektoreinrichtung 19 der Fig. 7, in welcher der Linse 32 noch ein refraktives Element 35 vorgeordnet ist, das die Strahlung besonders gut auf eine Detektorzeile verteilt.

Das Detektorarray 24 kann, wie bereits erwähnt, hinsichtlich seiner Geometrie ohne weitere Einschränkungen gewählt werden. Selbstverständlich muß das Umverteilungselement in der Detektoreinrichtung 19 dann auf das entsprechende Detektorarray angepaßt werden. Die einzelnen Pixel, mit denen das Bild 17 aufgelöst wird, sind letztlich hinsichtlich ihrer Größe nicht mehr durch das Detektorarray 24 vorgegeben, sondern durch das Element, welches die Umverteilung der Strahlung aus der Detektionsebene 18 bewirkt. Bei einer Airy-Scheibe ergibt sich der Durchmesser der Scheibe bei einer beugungsbegrenzten Abbildung gemäß der Formel 1,22 λ/NA, wobei λ die mittlere Wellenlänge der abgebildeten Strahlung und NA die numerische Apertur des Objektivs 13 ist. Die Halbwertsbreite ist dann 0,15 λ/NA. Um die Hochauflösung zu erreichen, genügt es, die Ortsauflösung bei der Detektion doppelt so groß wie die Halbwertsbreite zu gestalten, d. h. die Halbwertsbreite zweimal abzutasten. Ein Facettenelement 31 bzw. ein Ende einer Lichtleitfaser 21 am Lichtleitfaserbündeleingang 22 darf somit maximal halb so groß wie die Halbwertsbreite des beugungsbegrenzten Einzelbildes sein. Dies gilt natürlich unter Berücksichtigung des Abbildungsmaßstabes, den die Optik nach dem Objektiv 13 bewirkt. Im einfachsten Fall würde also ein 4x4-Array von Pixeln in der Detektionsebene 18 pro Halbwertsbreite mehr als genügen.

Die Zoomoptik, welche anhand der Figuren 5 und 6 erläutert wurde, erlaubt neben einer Anpassung dergestalt, daß die Beugungsverteilung des beugungsbegrenzten Bildes 17 des Spots 14 die Eingangsfläche der Detektoreinrichtung 19 optimal ausfüllt, auch noch eine weitere Betriebsart, wenn nämlich mehr als eine Airy-Scheibe in die Detektionsebene 18 abgebildet wird. Bei einer Messung, bei der mehr als eine Airy-Scheibe auf die Detektoreinrichtung 19 abgebildet wird, wird Licht aus weiteren Tiefenebenen der Probe 2 an den äußeren Pixeln der Detektoreinrichtung 19 detektiert. Im Zuge der Verarbeitung des Bildes erhält man dabei zusätzliche Signalstärke, ohne daß die Tiefenauflösung des LSM 1 beeinträchtigt wäre. Die Zoomoptik 27 bzw. 29 erlaubt es somit, einen Kompromiß zwischen Signal-/Rauschverhältnis des Bildes und Tiefenauflösung einzustellen.

Die in Fig. 1-8 vorgestellten Lösungen sind dazu geeignet, für einen Wellenlängenbereich Daten mit erhöhter räumlicher Auflösung zu gewinnen. Für viele Anwendungen ist es jedoch wünschenswert, Daten bei mehreren Wellenlängen zu erhalten.

Eine sequenzielle Datenaufnahme hat hierbei den Nachteil, dass sich zum einen Aufnahmezeit mehr als verdoppelt ,da zusätzlich zur Aufnahme des Bildes noch Zeiten für einen Wechsel der Filter und eine Änderung der Vergrößerung der Abbildung auf Faserbündel erforderlich sind.

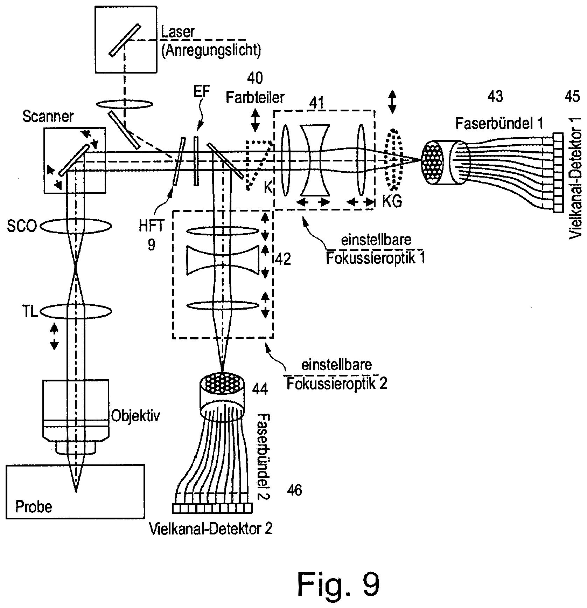

Mit einer Verdopplung der Detektoranordnung und einer spektralen Aufspaltung des Signales mit Hilfe von dichroitischen Strahlteilern ist es möglich, zeitlich Daten für zwei Wellenlängenbereiche zu gewinnen (vgl. Abbildung 9). Sensitive Detektoren sind jedoch die Kostentreiber in so einer Anordnung. Außerdem wird neben einem zusätzlichen Detektor auch eine Recheneinheit für eine Echtzeit-Datenaufnahme benötigt. Schließlich sind zwei Echtzeit-Systeme gleichzeitig zu steuern. Ein solcher Ansatz der Verdopplung der Detektionseinheit ist also mit erheblichen zusätzlichen Kosten verbunden.

Abbildung 9 zeigt eine nicht-erfindungsgemäße Laser-Scanning- Mikroskop -Anordnung zur hochaufgelösten Beobachtung einer Probe bei zwei verschiedenen Wellenlängenbereichen mit Hilfe einer Verdopplung von Detektor und Faserbündel.

Ein Farbteiler 40 teilt den Detektionsstrahlengang in zwei Teilstrahlengänge mit unterschiedlichen Wellenlängenbereichen auf.

Jeweils ist eine einstellbare Fokussieroptik 41 bzw. 42 sowie Faserbündel 43,44 und Mehrkanaldetektoren 45,46 wie bereits weiter oben beschrieben vorgesehen.

Ziel der vorliegenden Erfindung ist die Vermeidung der beschriebenen Nachteile.

Die Erfindung wird durch die Merkmale der unabhängigen Patentansprüche charakterisiert.

Bevorzugte Weiterbildungen sind Gegenstand der abhängigen Ansprüche.

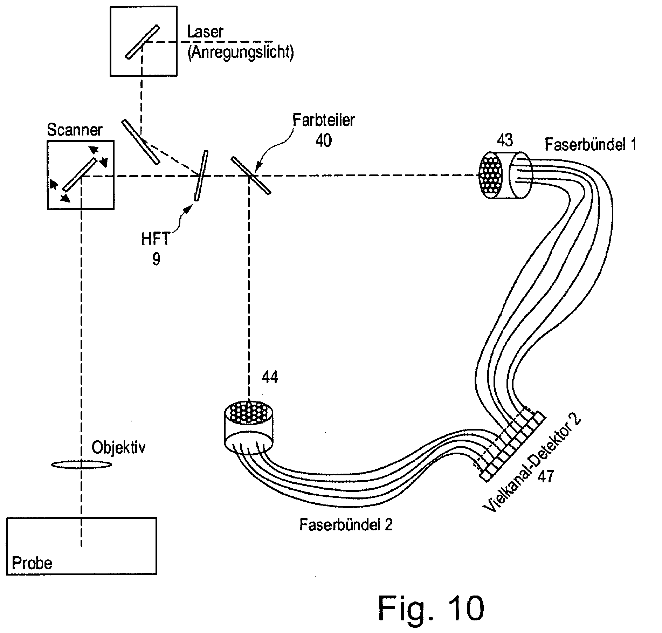

Nachstehend wird die Erfindung insbesondere anhand der Darstellungen in Fig. 10-19 näher erläutert.

### Die Bezugszeichen der Fig. 9-19 bedeuten:

40: Farbteiler
41,42: Einstellbare Fokussieroptik
43,44: Faserbündel
45,46,47: Mehrkanaldetektor
48,49: Faserbündel
50,51:Dektektorbereiche
52: Einstellbare Fokussieroptik
53,54:Verstellbare Optik
55: Einschwenkbarer Umlenkspiegel
56: Faserbündel
57,58,59:Faserbündel
60,61 ,62:Detektorbereiche
63: Lichtsperre/Farbfilter
64,65:Faserbündel
66,67,68: Dertektorbereiche
69: Faserbündel
70: Mehrkanaldetektor
71: Farbteiler
72: Spiegel

Der Ansatz der Erfindung beruht darauf, mit einem einzigen Mehrkanaldetektor zwei Wellenlängenbereiche detektieren zu können, wobei für beide Wellenlängenbereiche eine Sub-Airy Abtastung des Probensignals erfolgen kann.

Als Detektoren in einer solchen Anordnung, wie sie beispielsweise in DE102012204 128 A1 beschrieben ist, lassen sich beispielsweise GaAsP- oder Multialkali-Detektoren verwenden, die aus 32 Einzelkanälen bestehen. Für eine Berechnung von hochaufgelösten Bildern nach der Methode von Colin Sheppard et al., In Optik 80, No. 2, 53 (1982) muss pro Raumrichtung eine mindestens 2-fache Überabtastung der Airy-Scheibe erfolgen. Aus diesem Grunde wird erfindungsgemäß vorgeschlagen, die z.B. 32 Kanäle eines Detektors in zwei Gruppen zu je 16 Kanäle aufzuteilen. Jeweils 16 Kanäle dienen dazu, das Probensignal mit entsprechender Überabtastung der Airy-Scheibe zu detektieren. Eine Verrechnung der jeweils 16 Kanalbilder für einen Wellenlängenbereich führt zu einem hochaufgelösten Bild.

In einer Laserscanningmikroskop-Anordnung wird das Probensignal spektral in zwei Strahlengänge aufgeteilt (vgl. dazu Abbildung 9) - beispielsweise mit einem dichroitischen Farbteiler.

Abbildung 10 zeigt schematisch ein Laser-Scanning Mikroskop, bei dem Daten für zwei Wellenlängenbereiche erfindungsgemäß simultan mit einer einzigen Detektionseinheit gewonnen werden können. Dazu wird das Probenlicht mit einem Farbteiler 40 spektral aufgespalten und auf zwei Faserbündel 43,44, die eine sub-Airy Abtastung des Signals erlauben, gelenkt. Die beiden Faserbündel lenken anschließend das Licht auf einen gemeinsamen Vielkanal-Detektor 47.

Mit Hilfe einer Abbildungsoptik kann dabei die Probenebene dann für die beiden Strahlengänge der Spektralbereiche auf die beiden Faserbündel abgebildet werden, die vorteilhaft aus jeweils 16 Kanälen bestehen.

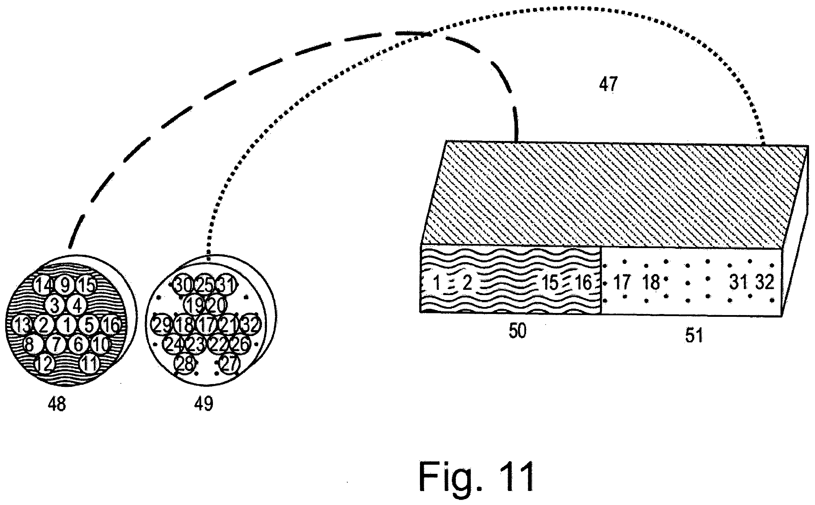

Die Probenebene ist zur Ebene der Eintrittsflächen der Faserbündel optisch konjugiert angeordnet. Die jeweiligen Faserbündel leiten dann das Licht der beiden Wellenlängenbereiche auf einen gemeinsamen Detektor. Eine solche Faseranordnung ist beispielhaft schematisch in Fig. 11 dargestellt.

Diese zeigt eine Faseranordnung zur gleichzeitigen Aufnahme von Bildern mit einer erhöhten Auflösung für zwei Wellenlängenbereiche. Dabei werden die Fasern 1 bis 16 in einem ersten Stecker oder Faserbündel 48 (im Bild links) einem ersten Wellenlängenbereich zugeordnet; die Fasern 17 bis 32 werden in einem zweiten Stecker oder Faserbündel 49 einem zweiten Wellenlängenbereich zugeordnet. Beide Stecker befinden sich in einer Bildebene die einer Pinholeebene entspricht.

Die Fasern der beiden Stecker werden dann in einem Bereich 50 und 51 auf dem Detektor 47 jeweils zusammengeführt (im Bild rechts), um das Licht der beiden Wellenlängenbereiche auf eine gemeinsame Detektorzeile 47 mit 32 Kanälen zu führen.

Um auf Basis der zweimal 16 Detektions-Kanäle eine stabile Rekonstruktion von hochaufgelösten Bildern gewährleisten zu können, ist es einerseits wichtig, für das Übersprechen zwischen einzelnen Kanälen (sowohl über die Lichtleitfasern als auch am und im Detektor) eine Korrektion durchzuführen. Dies kann beispielsweise über eine Kalibrationsmessung erfolgen, bei der eine definierte Lichtmenge nacheinander in jede Faser eingebracht wird und das Signal auf allen Kanälen gemessen wird. Die daraus resultierende Matrix kann invertiert werden, um einem gemessenen Signal am Detektor eine Intensitätsverteilung an den Fasern zuzuordnen.

Andererseits muss sichergestellt sein, dass die Anordnung der Fasern in den beiden Faserbündeln 48,49 derart ist, dass das Subsampling der Airy-Scheibe gewährleitet ist. Die in Fig.11 dargestellte Anordnung basiert auf einer hexagonalen Anordnung von runden Fasern. Für die waagerechte Richtung kann die Airy-Scheibe mit den Fasern 13, 2, 1, 5 und 16 erfasst werden. Dazu stehen unter 60° die Fasern 14, 3, 1, 6 und 11; unter 120° stehen die Fasern 15, 4, 1, 7 und 12. Auf diese Weise wird das oben angegebene Abtastkriterium für drei Orientierungen erzielt. Die zusätzlichen Fasern 8, 9 und 10 verbessern zum einen die Sammeleffizienz und damit das Signal-zu-Rauschen Verhältnis, zum anderen wird das Sampling für die übrigen Orientierungen verbessert.

Die beschriebene Anordnung der Fasern ist nicht nur auf solche mit rundem Durchmesser beschränkt; für hexagonale Fasern würde sich eine solche Anordnung ebenfalls anbieten. Im Falle von quadratischen Fasern, für die diese Anordnung ebenfalls möglich ist, bietet es sich an, sie in einer quadratischen Matrix von 4x4 Elementen anzuordnen. In diesem Fall wird ein Sampling von 4 Fasern für die verschiedenen Richtungen einer Airy-Scheibe erzielt.

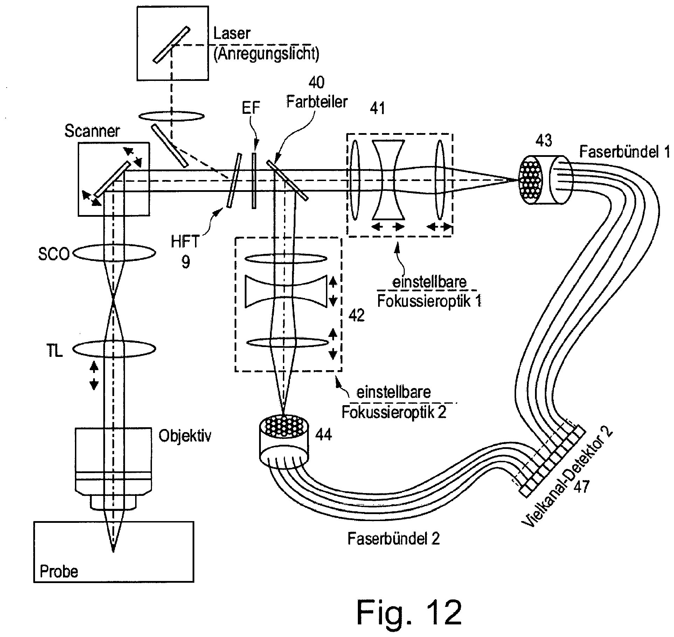

Bei der mikroskopischen Betrachtung eines Objektes bei mehreren Wellenlängen ist zu beachten, dass die Größe der Airy-Scheibe wellenlängenabhängig ist. Sie ist direkt proportional zur Wellenlänge. Das hat zur Folge, dass für ein optimales Sampling der Airy-Scheibe die Abbildung auf die Faser für die beiden Wellenlängenbereiche eine Anpassung erforderlich ist. Hierfür gibt es mehrere erfindungsgemäße Lösungen:
Für die beiden Strahlwege wird jeweils ein Zoom-System 41,42 verwendet, um ein optimales Sampling für beide Bereiche zu erzielen (siehe auch Abbildung 12). Eine solche Anordnung zeichnet sich durch maximale Flexibilität aus.

Abbildung 12 zeigt eine erste Lösung für eine Anpassung der Optik an die unterschiedlichen Pupillengrößen für die beiden zu detektierenden Wellenlängenbereiche. In diesem Fall besitzen beide Detektionskanäle jeweils eine eigene einstellbare Fokussieroptik 41,42. Diese Lösung bietet maximale Flexibilität.

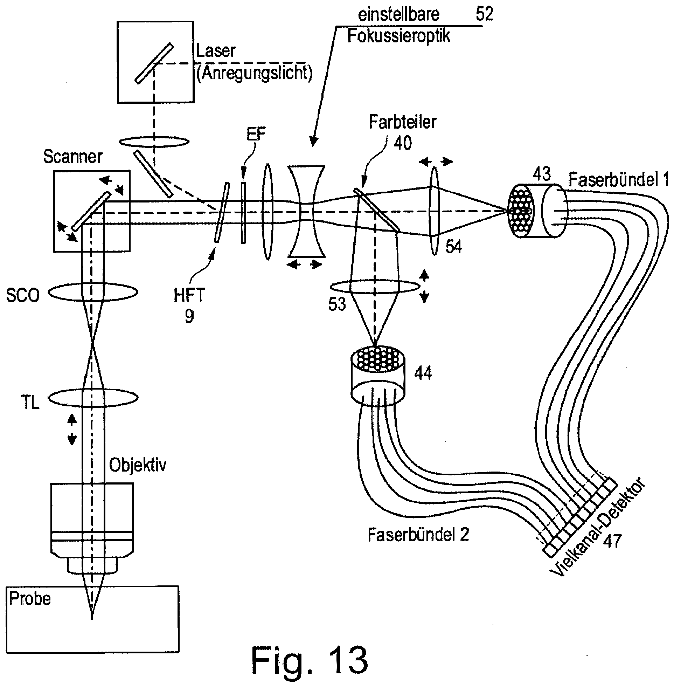

Alternativ ist es möglich, einen Teil des Zoom-Systems für beide Wellenlängenbereiche zusammen zu nutzen. Die Strahlteilung erfolgt dann nach einem gemeinsam genutzten Teil des Zoom-Systems 52 (siehe auch Abbildung 13). Eine solche Anordnung ist ähnlich flexibel wie die erste Lösung; sie ist aber kostengünstiger und kompakter.

Abbildung 13 zeigt eine zweite Lösung für eine Anpassung der Optik an die unterschiedlichen Pupillengrößen für die beiden zu detektierenden Wellenlängenbereiche. In diesem Fall besitzen beide Detektionskanäle eine gemeinsame einstellbare Fokussieroptik 52; in den getrennten Strahlengängen erfolgt dann die Anpassung an die Pupillengrößen mit entlang der optischen Achse verschiebbaren optischen Elementen 53,54.

Diese Lösung ist ähnlich flexibel wie die oben in Abbildung 12 beschriebene Lösung.

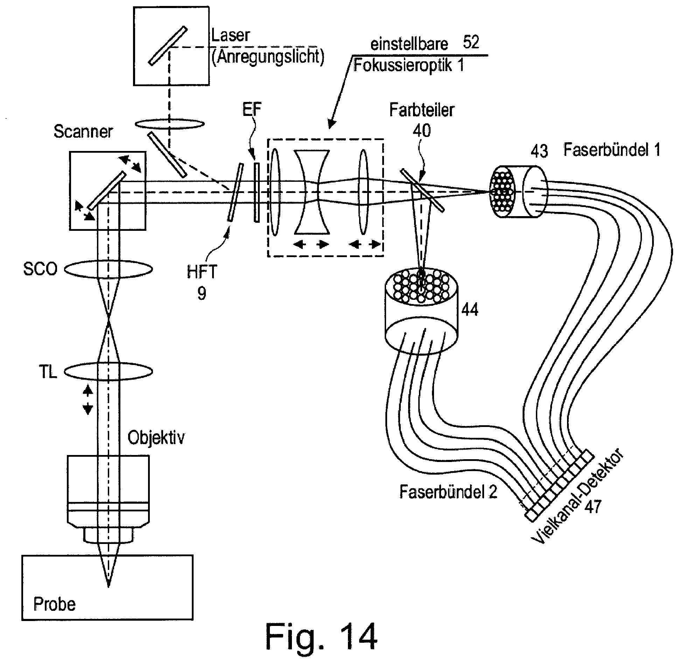

in der Regel gibt es typische Kombinationen von Wellenlängenbereichen, die simultan vermessen werden sollen. Dies ergibt sich aus typischen Kombinationen von Farbstoffen, die für das Anfärben von biologischen Proben verwendet werden. Betrachtet man die Verhältnisse der zentralen Wellenlänger für typische Kombinationen, so ergibt sich ein Wert von λ₁/λ₂ ≈ 1.15. Dieses Verhältnis kann man sich für weitere Vereinfachungen des optischen Systems zunutze machen:
- Die Wellenlängenaufspaltung des Detektionslichtes wird wie in Fig.13 erst nach einem gemeinsam verwendeten Zoom-System 52 durchgeführt. Im Anschluss wird die Abbildung des langweiligeren Detektionskanals um einen Faktor von beispielsweise etwa 1.15 verkleinert, so dass die für beide Wellenlängenbereiche die Größe der Airy-Scheibe auf den beiden Faserbündeln gleich ist (siehe auch Fig. 13).
- Alternativ werden in den beiden Faserbündeln Fasern verwendet, deren Durchmesser (und auch deren Bündeldurchmesser) gerade ein Verhältnis von beispielsweise 1.15 besitzen (vgl. Abbildung 14). Auf diese Weise kann auf eine zusätzliche Optik in einem der beiden Detektionskanäle verzichtet werden.
- Abbildung14 zeigt eine derartige Lösung für eine Anpassung der Optik an die unterschiedlichen Pupillengrößen für die beiden zu detektierenden Wellenlängenbereiche. In diesem Fall besitzen beide Detektionskanäle eine gemeinsame einstellbare Fokussieroptik 52. Die Anpassung an die Pupillengrößen erfolgt durch eine Änderung von Faserdurchmesser und Faserbündeldurchmesser in 43,44; sie stehen in einem festen Verhältnis zueinander - entsprechend typischen Wellenlängenverhältnissen.
- Schließlich und endlich besteht auch die Möglichkeit, sowohl auf eine Zusatzoptik und unterschiedliche Faserdurchmesser zu verzichten. In diesem Fall empfiehlt es sich, entweder für einen Wellenlängenbereich ein optimales Sampling zu wählen bei gleichzeitiger Billigung, dass für den zweiten Wellenlängenbereich die Abtastung schlechter ist, oder den Zoom derart einzustellen, dass die Airy-Scheibe auf einem Faserbündel etwa 7.5% zu groß und auf dem zweiten Bündel zu klein ist. Solche Effekte lassen sich in die Rekonstruktion berücksichtigen - führen jedoch nicht zu einer optimalen Auflösungssteigerung.
- Alternativ wird die einstellbare Fokussieroptik so ausgelegt, dass sie einen Farbquerfehler besitzt, der die Vergrößerung der Airy-Scheibe gerade kompensiert.

In allen beschriebenen Anordnungen lassen sich die Farbteiler mit einer entsprechenden Mechanik austauschen, um die Auswahl der beiden Wellenlängenbänder flexibel gestalten zu können.

Prinzipiell lassen sich die vorgestellten Anordnungen und Varianten auch auf mehr als nur zwei Wellenlängenbereiche erweitern. Hierzu sind zusätzliche Farbteilungen und Aufteilungen der Detektorkanäle erforderlich.

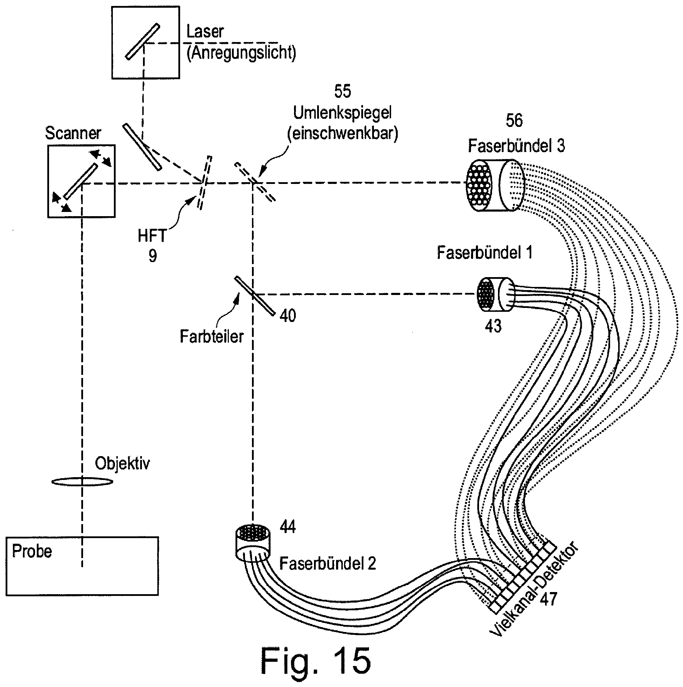

Abbildung 15 zeigt eine Variante eines Laser-Scanning Mikroskop, bei dem Daten für zwei Wellenlängenbereiche simultan mit einer einzigen Detektionseinheit über Faserbündel 43,44 gewonnen werden können, und bei dem alternativ Messungen bei einer Wellenlänge über ein Faserbündel 56 durchgeführt werden können (in Abhängigkeit davon, ob sich der bewegliche Umlenkspiegel 55 im Strahlengang befindet oder nicht). Alle drei Faserbündel erlauben eine sub-Airy Abtastung des Signals. Die Signale werden anschließend auf einen gemeinsamen Vielkanal-Detektor gelenkt.

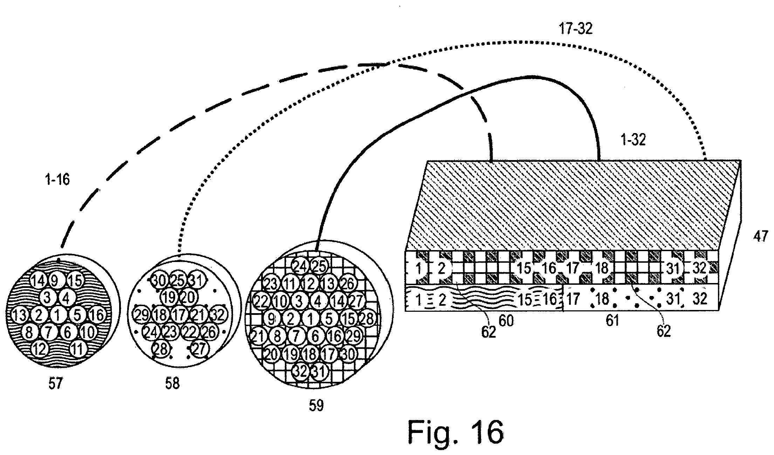

Abbildung 16 zeigt zu Fig.15 die Skizze einer Faseranordnung zur gleichzeitigen Aufnahme von Bildern mit einer erhöhten Auflösung für zwei Wellenlängenbereiche sowie einer zusätzlichen, alternativen Möglichkeit zur Beobachtung der Probe mit feinerem Sampling der Airy-Scheibe oder verbessertem Signal-zu Rauschen Verhältnis (SNR), je nach Größe der Airy Scheibe auf dem Fasereingang. Dabei werden die Fasern 1 bis 16 in einem ersten Stecker oder Faserbündel 57 (43 in Fig. 15) (im Bild links) einem ersten Wellenlängenbereich 60 auf dem Detektor 47 zugeordnet; die Fasern 17 bis 32 werden in einem zweiten Stecker oder Faserbündel 59 (44 in Fig.15) einem zweiten Wellenlängenbereich zugeordnet. Ein dritter Stecke oder Faserbündel 59 (56 in Fig.15) mit den Fasern 1' bis 32' dient einer alternativen Probenbeobachtung bei einer Wellenlänge über die gesamte Detektionsfläche 62 des Detektors 47

Alle drei Stecker befinden sich in einer Bildebene. Die Fasern aller drei Stecker werden dann zusammengeführt (im Bild rechts), um das Licht der beiden Wellenlängenbereiche auf eine gemeinsame Detektorzeile mit 32 Kanälen zu führen. Dabei ist die Zusammenführung derart ausgestaltet, dass die Fasern 1 aus 57 und 1' aus 59 dem ersten Detektor-Kanal zugeordnet werden, die Fasern 2 und 2' dem zweiten Kanal und so fort. Auf diese Weise lassen sich mit demselben Detektor wahlweise Messungen bei zwei Wellenlängen durchführen oder Messungen bei einer Wellenlänge aber mit feinerem Sampling oder besserem SNR.

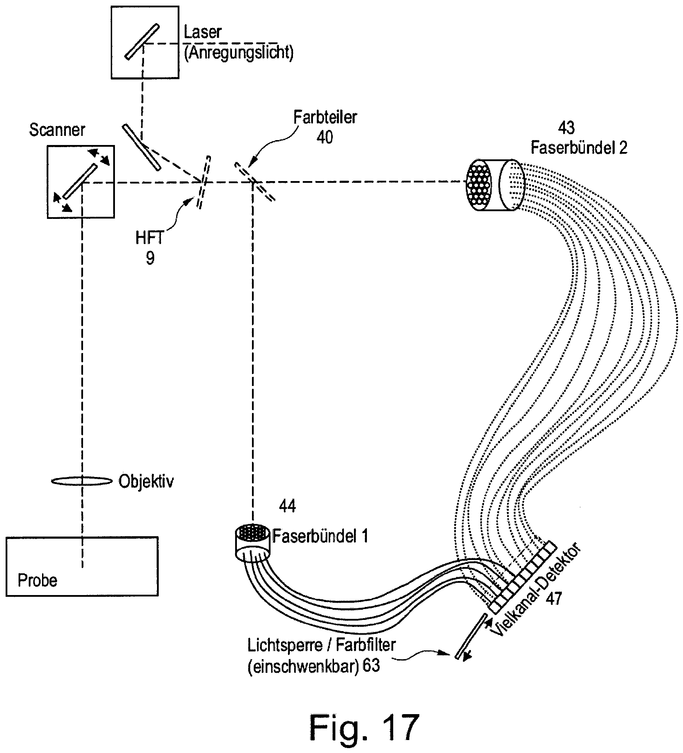

Abbildung 17 zeigt eine weitere Variante eines Laser-Scanning Mikroskop, bei dem Daten für zwei Wellenlängenbereiche simultan mit einer einzigen Detektionseinheit gewonnen werden können, und bei dem alternativ Messungen bei einer Wellenlängen durchgeführt werden können (in Abhängigkeit davon, ob sich der bewegliche Farbteiler im Strahlengang befindet oder nicht). Alle beiden Faserbündel 43,44 erlauben eine sub-Airy Abtastung des Signals. Die Signale werden anschließend auf einen gemeinsamen Vielkanal-Detektor 47 gelenkt. Soll eine Detektion nur für eine Wellenlänge durchgeführt werden, kann mittels einer einschwenkbaren bzw. einschiebbare Lichtsperre oder einem Farbfilter 63 verhindert werden, dass Licht aus Faserbündel 1 auf den Detektor fällt. Umgekehrt kann mittels Lichtsperre oder Farbfilter 63 (mit anderen Transmissionseigenschaften) dafür gesorgt werden, dass bei einer Beobachtung von zwei Wellenlängenbereichen, das Licht aus Faserbündel 2 nicht in die Detektorkanäle fällt, die von Faserbündel 1 beleuchtet werden.

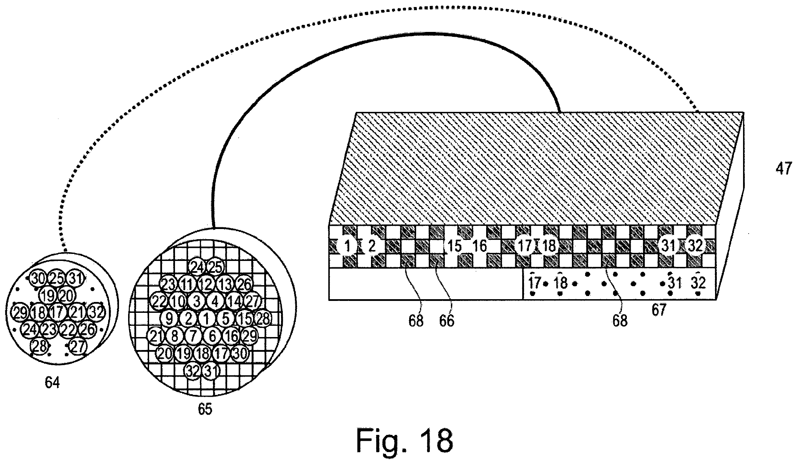

Abbildung 18 zeigt eine Faseranordnung zur gleichzeitigen Aufnahme von Bildern mit einer erhöhten Auflösung für zwei Wellenlängenbereiche sowie einer zusätzlichen, alternativen Möglichkeit zur Beobachtung der Probe mit feinerem Sampling der Airy-Scheibe. Dabei werden die Fasern 17 bis 32 in einem ersten Stecker 64 (im Bild links) einem ersten Wellenlängenbereich 67 auf dem Detektor 47 zugeordnet; die Fasern 1 bis 16 werden in einem zweiten Stecker 65 einem zweiten Wellenlängenbereich 66 auf dem Detektor 47 zugeordnet. Alternativ kann das gesamte Probenlicht beispielsweise durch Ausschwenken des Farbteilers in Fig.12 nur auf den zweiten Stecker gelenkt werden; dann dienen die Fasern 1' bis 32' (Detektorbereich 68) einer Datenaufnahme bei einer Wellenlänge. Beide Stecker befinden sich in einer Bildebene optisch konjugiuert zur Probenebene. Die Fasern der beiden Stecker werden dann zusammengeführt (im Bild rechts), um das Licht der beiden Wellenlängenbereiche auf eine gemeinsame Detektorzeile mit 32 Kanälen zu führen. Dabei ist die Zusammenführung derart ausgestaltet, dass die Fasern 17 aus 64 und 17' aus 65 dem siebzehnten Detektor-Kanal zugeordnet werden, die Fasern 18 und 18' dem achtzehnten Kanal und so fort; die ersten sechzehn Detektorkanäle erhalten nur über die Fasern 1' bis 16' Signal. Auf diese Weise lassen sich mit demselben Detektor wahlweise Messungen bei zwei Wellenlängen durchführen oder Messungen bei einer Wellenlänge aber mit feinerem Sampling oder verbessertem SNR.

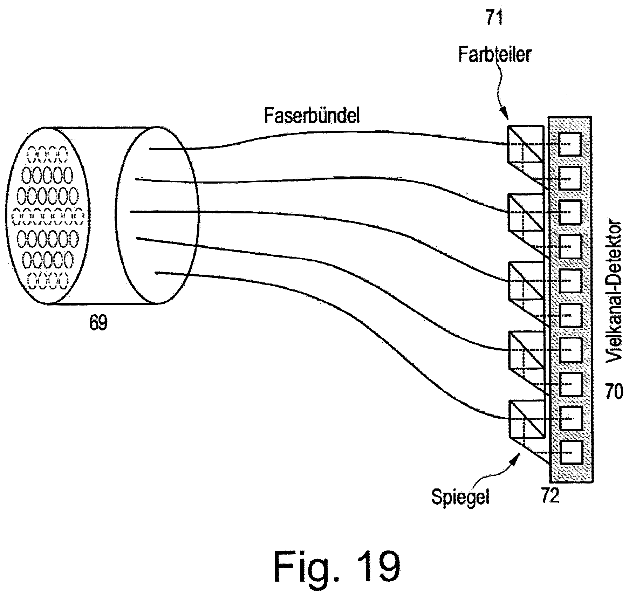

Abbildung 19 zeigt eine Skizze für eine ebenfalls erfindungsgemäße Detektionseinheit für eine Detektion eines hochaufgelösten Bildes für zwei Farbkanäle. Die chromatische Aufspaltung erfolgt hier nach dem Faserbündel 69.

Vor der Detektormatrix- oder Zeile 70 sind miniaturisierte Farbteiler 71 aufgebracht, die jeweils ein Detektorelement transmittiv beaufschlagen und ein zweites durch eine doppelte Reflektion an einem Teilerspiegel und einem weiteren Spiegel 72.

Mittels Farbteiler 71 und Spiegel 72 wird das Signal in zwei spektrale Anteile zerlegt und auf jeweils zwei Detektorelemente des Mehrkanaldetektors 70 verteilt. In diesem Beispiel wird beispielsweise anhand der ungeraden Detektorkanäle ein hochaufgelöstes Bild für einen ersten Wellenlängenbereich erzeugt, die geraden Kanäle ergeben ein Bild für einen zweiten Wellenlängenbereich.

### Varianten:

Im Folgenden werden verschiedene Varianten der oben vorgestellten erfindungsgemäßen Lösungen beschrieben:
a) Wenn die sensitive Fläche des verwendeten Mehrkanaldetektors hinreichend groß ist, ist es möglich, das Faserbündel so zu konfektionieren, dass mehr als nur eine Faser Licht auf ein Detektorelement leitet. Auf diese Weise ist es dem Benutzer möglich, einen wie oben beschrieben Detektionskanal für eine simultane Detektion von zwei Wellenlängenbereichen zu verwenden, oder alternativ in einem zweiten Detektionskanal alle Detektorkanäle für eine Probenbeobachtung bei einer Wellenlänge zu Verfügung zu haben (z.B. mit einem noch feineren Sampling der Airy-Scheibe oder einem verbessertem Signal-zu-Rauschen aufgrund der Beobachtung von mehr als einem Airy Eine solche kombinierte Faserstecker-Anordnung ist in Abbildung dargestellt.
b) Alternativ zur oben vorgestellten Lösung fasst man in einem der beiden Faserbündel 16 Fasern zusammen, während im zweiten Bündel 32 Fasern enthalten sind. Eine schematische Darstellung hierzu ist in Abbildung 17 zu sehen. Auch hier kann eine Beobachtung der Probe in zwei Wellenlängenbereichen realisiert werden. Für den ersten Wellenlängenbereich werden die Fasern 1' bis 16' aus dem Bündel mit 32 Fasern verwendet, für den zweiten Wellenlängenbereich dienen die Fasern 16 bis 32 aus dem Bündel mit 16 Faser (vgl. Abbildung 17). Um sicherzustellen, dass kein Probenlicht aus den Fasern 17' bis 32' auf den Detektor fällt, wenn Daten bei zwei Wellenlängenbereichen detektiert werden sollen, muss in diesem Fall entweder ein Lichtsperre zwischen den Faserausgängen 17' bis 32' und den Detektorkanälen 17 bis 32 in den Strahlengang eingebracht werden, oder es ist ein Farbfilter zwischen den Faserenden 17, 17', ... 32, 32' und den dazugehörigen Detektorkanälen einzufügen, der lediglich das Licht vom Wellenlängenbereich der Fasern 17 bis 32 transmittiert und das Licht aus den Fasern 17` bis 32' blockiert.
c) Eine weitere Alternative zu den oben vorgestellten Anordnungen basiert auf der Verwendung eines einzelnen Faserbündels. Die spektrale Aufspaltung der Wellenlängenbereiche erfolgt erst zwischen Faserausgang und dem Detektor. Hier erfolgt hinter jeder Faser eine Strahlteilung entsprechend der Wellenlängenbänder. Die beiden Wellenlängenbänder werden dann auf zwei Detektorelemente verteilt. Eine Darstellung ist in Abbildung 19 zu finden. Es sei angemerkt, dass hier die Anpassung des Faserbündels entweder nur für eine Wellenlänge oder als Kompromiss zwischenbeiden Wellenlängen erfolgen kann. Alternativ wird die einstellbare Fokussieroptik so ausgelegt, dass sie einen Farbquerfehler besitzt, der die Vergrößerung der der Airy-Scheibe gerade kompensiert. Ggf. ist eine zusätzliche Fokussieroptik notwendig, um das Licht der Fasern auf die Detektorkanäle zu richten.

## Patentansprüche

1. Mikroskop zur hochauflösenden Scanning-Mikroskopie einer Probe (2), mit
- einer Beleuchtungseinrichtung (3) zum Beleuchten der Probe (2),
- einer Abbildungseinrichtung (4) zum Scannen mindestens eines Punkt- oder Linien-Spots (14) über die Probe (2) und zum Abbilden des Punkt- oder Linien-Spots (14) in ein beugungsbegrenztes, ruhendes Einzelbild (17) in eine Detektionsebene (18),
- einer Detektoreinrichtung (19) zum Erfassen des Einzelbildes (17) in der Detektionsebene (18) für verschiedene Scanpositionen mit einer Ortauflösung,
- einer Auswerteeinrichtung (C) zum Auswerten einer Beugungsstruktur des Einzelbildes (17) für die Scanpositionen aus Daten der Detektoreinrichtung (19) und zum Erzeugen eines Bildes der Probe (17), das eine Auflösung aufweist, die über die Beugungsgrenze gesteigert ist, wobei die Detektoreinrichtung (19) aufweist:
- ein Detektorarray (47), das Pixel (25) aufweist und größer ist als das Einzelbild (17) ist, und
- ein nicht-abbildendes Umverteilungselement, das dem Detektorarray (47) vorgeordnet ist und die Strahlung aus der Detektionsebene (18) nicht-abbildend auf die Pixel (25) des Detektorarrays (47) verteilt,
**gekennzeichnet durch** mindestens zwei Umverteilungselemente, die parallel mit Detektionslicht beaufschlagt sind, wobei Strahlung aus den mindestens zwei Umverteilungselementen auf die Pixel (25) des Detektorarrays (47) gelangt, wobei die Umverteilungselemente je ein Bündel (43, 44, 48, 49, 56, 57, 58, 59) aus Lichtleitfasern umfassen, welches einen Eingang und einen Ausgang aufweist, an dem die Lichtleitfasern in einer geometrischen Anordnung, welche sich von der des Eingangs unterscheidet, an den Pixeln (25) des Detektorarrays (47) enden und
- wobei im Detektionsstrahlengang mindestens ein Farbteiler (40) zur Erzeugung von mindestens zwei Teilstrahlengängen mit zumindest teilweise unterschiedlicher Spektralcharakteristik angeordnet ist, so dass sich das Detektionslicht in den Umverteilungselementen zumindest teilweise bezüglich seiner spektralen Zusammensetzung unterscheidet.

2. Mikroskop zur hochauflösenden Scanning-Mikroskopie einer Probe (2), mit
- einer Beleuchtungseinrichtung (3) zum Beleuchten der Probe (2),
- einer Abbildungseinrichtung (4) zum Scannen mindestens eines Punkt- oder Linien-Spots (14) über die Probe (2) und zum Abbilden des Punkt- oder Linien-Spots (14) in ein beugungsbegrenztes, ruhendes Einzelbild (17) in eine Detektionsebene (18),
- einer Detektoreinrichtung (19) zum Erfassen des Einzelbildes (17) in der Detektionsebene (18) für verschiedene Scanpositionen mit einer Ortauflösung,
- einer Auswerteeinrichtung (C) zum Auswerten einer Beugungsstruktur des Einzelbildes (17) für die Scanpositionen aus Daten der Detektoreinrichtung (19) und zum Erzeugen eines Bildes der Probe (17), das eine Auflösung aufweist, die über die Beugungsgrenze gesteigert ist, wobei die Detektoreinrichtung (19) aufweist:
- ein Detektorarray (70), das Pixel (25) aufweist und größer ist als das Einzelbild (17) ist, und
- ein nicht-abbildendes Umverteilungselement, das dem Detektorarray (70) vorgeordnet ist und die Strahlung aus der Detektionsebene (18) nicht-abbildend auf die Pixel (25) des Detektorarrays (70) verteilt,
**dadurch gekennzeichnet, dass** das Umverteilungselement ein Bündel (69) aus Lichtleitfasern umfasst, welches einen Eingang und einen Ausgang aufweist, an dem die Lichtleitfasern in einer geometrischen Anordnung, welche sich von der des Eingangs unterscheidet, an den Pixeln (25) des Detektorarrays (70) enden und
- wobei in Lichtrichtung hinter Lichtleitfasern und vor den Pixeln (25) eines Detektorarrays (70) dichroitische Spiegel (71) und Umlenkelemente (72) so vorgesehen sind, dass benachbarte Pixel (25) mit zumindest teilweise unterschiedlichen Wellenlängen beaufschlagt sind.

3. Mikroskop nach Anspruch 1 oder 2, **dadurch gekennzeichnet, dass** die Lichtleitfasern Multi-Mode Lichtleitfasern sind.

4. Mikroskop nach Anspruch 1, 2 oder 3, **dadurch gekennzeichnet, daß** die Lichtleitfasern (21) so vom Eingang (22) zum Ausgang (23) laufen, daß am Ausgang (23) benachbarte Lichtleitfasern (21) auch am Eingang (22) benachbart sind, um ein strahlungsintensitätsabhängiges Übersprechen nebeneinanderliegender Pixel (25) zu minimieren.

5. Mikroskop nach einem der obigen Ansprüche, **dadurch gekennzeichnet, daß** die Abbildungseinrichtung (4) eine der Detektionsebene (18) in Abbildungsrichtung vorgeordnete Zoomoptik (27) zur Anpassung der Größe des Einzelbildes (17) an die der Detektoreinrichtung (19) aufweist.

6. Mikroskop nach Anspruch 5, **dadurch gekennzeichnet, daß** die Beleuchtungseinrichtung (3) und die Abbildungseinrichtung (4) sich eine Scaneinrichtung (10) teilen, so daß die Beleuchtungseinrichtung (3) die Probe (2) mit einem beugungsbegrenzten Punkt- oder Linien-Spot beleuchtet, der mit dem von der Abbildungseinrichtung abgebildeten Spot (14) zusammenfällt, wobei die Zoomoptik (27) so angeordnet ist, daß sie auch Bestandteil der Beleuchtungseinrichtung (3) ist.

7. Verfahren zur hochauflösenden Scanning-Mikroskopie einer Probe (2), bei dem
- die Probe (2) beleuchtet wird,
- mindestens ein scannend über die Probe (2) geführter Punkt- oder Linien-Spot (14) in ein Einzelbild (17) abgebildet wird, wobei der Spot (14) beugungsbegrenzt in das Einzelbild (17) abgebildet wird und das Einzelbild (17) ruhend in einer Detektionsebene (18) liegt,
- für verschiedene Scanpositionen das Einzelbild (17) mit einer Ortauflösung erfaßt wird, so daß eine Beugungsstruktur des Einzelbildes (17) erfaßt wird,
- für jede Scanposition die Beugungsstruktur des Einzelbildes (17) ausgewertet wird und ein Bild der Probe (2) erzeugt wird, das eine Auflösung aufweist, die über die Beugungsgrenze gesteigert ist, wobei
- ein Detektorarray (47) bereitgestellt wird, das Pixel (25) aufweist und größer ist als das Einzelbild (17), und
- Strahlung des Einzelbildes aus der Detektionsebene (18) nicht-abbildend auf die Pixel (25) des Detektorarrays (47) umverteilt wird,
**gekennzeichnet durch** mindestens zwei Umverteilungselemente, die parallel mit Detektionslicht beaufschlagt werden, und wobei Strahlung aus den mindestens zwei Umverteilungselementen auf die Pixel (25) des Detektorarrays (47) gelangt, wobei die Umverteilungselemente je ein Bündel (43, 44, 48, 49, 56, 57, 58, 59) aus Lichtleitfasern umfassen, welches einen Eingang und einen Ausgang aufweist, an dem die Lichtleitfasern in einer geometrischen Anordnung, welche sich von der des Eingangs unterscheidet, an den Pixeln (25) des Detektorarrays (47) enden und wobei im Detektionsstrahlengang mindestens ein Farbteiler (40) zur Erzeugung von mindestens zwei Teilstrahlengängen mit zumindest teilweise unterschiedlicher Spektralcharakteristik angeordnet ist, so dass sich das Detektionslicht zumindest teilweise bezüglich seiner spektralen Zusammensetzung unterscheidet.

8. Verfahren nach Anspruch 7, **dadurch gekennzeichnet, dass** die Lichtleitfasern Multi-Mode-Lichtleitfasern sind.

9. Verfahren nach Anspruch 7 oder 8, **dadurch gekennzeichnet, daß** die Lichtleitfasern (21) so vom Eingang (22) zum Ausgang (23) geführt werden, daß am Ausgang (23) benachbarte Lichtleitfasern (21) auch am Eingang (22) benachbart sind, um ein strahlungsintensitätsabhängiges Übersprechen nebeneinanderliegender Pixel (25) zu minimieren.

10. Verfahren nach Anspruch 7, 8 oder 9, **dadurch gekennzeichnet, daß** das Bündel (20) aus Lichtleitfasern (21) und das Detektorarray (24) kalibriert werden, indem jede Lichtleitfaser (21) einzeln mit Strahlung beaufschlagt wird, Störsignal in Pixeln (25), die am Ausgang (23) benachbarten Lichtleitfasern (21) zugeordnet sind, erfaßt werden und eine Kalibriermatrix aufgestellt wird, mit der bei Mikroskopie der Probe (2) ein strahlungsintensitätsabhängiges Übersprechen nebeneinanderliegender Pixel (25) korrigiert wird.

11. Verfahren nach einem der Ansprüche 7 bis 10, **dadurch gekennzeichnet, daß** eine Bewegungsrichtung des Scannens des Punkt- oder Linien-Spots (14) ermittelt wird, indem Signale einzelner Pixel (25) des Detektorarrays (24) mittels Kreuzkorrelation ausgewertet werden.

12. Verfahren nach einem der Ansprüche 7 bis 11, **dadurch gekennzeichnet, daß** Veränderungen in der Probe (2) erfaßt werden, indem bei in der Probe (2) ruhendem Punkt- oder Linien-Spot (14) eine zeitliche Veränderung des beugungsbegrenzten Einzelbildes (17) ermittelt und ausgewertet wird.

13. Mikroskop nach Anspruch 1 oder nach einem der Ansprüche 1 bis 6, soweit sie auf Anspruch 1 rückbezogen sind, **gekennzeichnet durch** eine oder mehrere der folgenden Ausführungen:
- wobei Detektionslicht aus den Umverteilungselementen auf nebeneinander liegende Bereiche des Detektorarrays gelangt,
- wobei mindestens ein Pixel des Detektorarrays mit Detektionslicht aus mindestens zwei Umverteilungselementen beaufschlagt ist,
- wobei Pixel des Detektorarrays sowohl mit Detektionslicht einer gefilterten spektralen Zusammensetzung als auch mit Detektionslicht ohne spektrale Filterung beaufschlagt sind,
- wobei zur Detektion ohne spektrale Filterung mehr Pixel mit Detektionslicht beaufschlagt sind als zur spektral gefilterten Detektion,
- wobei die Pixel mit der obengenannten Beaufschlagung nebeneinander angeordnet sind und/oder die Pixel mit Licht aus mindestens zwei Umverteilungselementen beaufschlagt sind,
- wobei im Detektionsstrahlengang ein Schaltelement zur Freigabe einer Beaufschlagung eines Umverteilungselementes mit ungefiltertem Detektionslicht vorgesehen ist,

14. Verfahren nach einem der Ansprüche 7 bis 11, **gekennzeichnet durch** eine oder mehrere der folgenden Ausführungen:
- wobei Pixel des Detektorarrays sowohl mit Detektionslicht einer gefilterten spektralen Zusammensetzung als auch mit Detektionslicht ohne spektrale Filterung beaufschlagt sind,
- wobei zur Detektion ohne spektrale Filterung mehr Pixel mit Detektionslicht beaufschlagt sind als zur spektral gefilterten Detektion,
- wobei die Pixel mit der obengenannten Beaufschlagung nebeneinander angeordnet sind und/oder die Pixel mit Licht aus mindestens zwei Umverteilungselementen beaufschlagt sind,
- wobei im Detektionsstrahlengang ein Schaltelement zur Freigabe einer Beaufschlagung eines Umverteilungselementes mit ungefiltertem Detektionslicht vorgesehen ist,

## Claims

1. Microscope for high-resolution scanning microscopy of a sample (2), comprising
- an illumination device (3) for illuminating the sample (2),
- an imaging device (4) for scanning at least one point spot or line spot (14) over the sample (2) and for imaging the point spot or line spot (14) into a diffraction-limited, static single image (17) into a detection plane (18),
- a detector device (19) for capturing the single image (17) in the detection plane (18) for various scanning positions with a spatial resolution,
- an evaluation device (C) for evaluating a diffraction structure of the single image (17) for the scanning positions from data from the detector device (19) and for generating an image of the sample (17), which has a resolution which is increased beyond the diffraction limit, wherein the detector device (19) comprises:
- a detector array (47) which has pixels (25) and is larger than the single image (17), and
- a non-imaging redistribution element, which is arranged upstream of the detector array (47) and distributes the radiation from the detection plane (18) in a non-imaging manner over the pixels (25) of the detector array (47), **characterized by** at least two redistribution elements on which detection light is incident in a parallel manner, wherein radiation from the at least two redistribution elements passes to the pixels (25) of the detector array (47), wherein the redistribution elements each comprise a bundle (43, 44, 48, 49, 56, 57, 58, 59) of optical fibres which has an input and has an output at which the optical fibres end at the pixels (25) of the detector array (47) in a geometric arrangement which differs from that of the input, and
- wherein at least one colour splitter (40) for generating at least two partial beam paths with at least partially differing spectral characteristics is arranged in the detection beam path in a manner such that the detection light in the redistribution elements differs at least in part with respect to its spectral composition.

2. Microscope for high-resolution scanning microscopy of a sample (2), comprising
- an illumination device (3) for illuminating the sample (2),
- an imaging device (4) for scanning at least one point spot or line spot (14) over the sample (2) and for imaging the point spot or line spot (14) into a diffraction-limited, static single image (17) into a detection plane (18),
- a detector device (19) for capturing the single image (17) in the detection plane (18) for various scanning positions with a spatial resolution,
- an evaluation device (C) for evaluating a diffraction structure of the single image (17) for the scanning positions from data from the detector device (19) and for generating an image of the sample (17), which has a resolution which is increased beyond the diffraction limit, wherein the detector device (19) comprises:
- a detector array (70) which has pixels (25) and is larger than the single image (17), and
- a non-imaging redistribution element, which is arranged upstream of the detector array (70) and distributes the radiation from the detection plane (18) in a non-imaging manner over the pixels (25) of the detector array (70), **characterized in that** the redistribution element comprises a bundle (69) of optical fibres which has an input and has an output at which the optical fibres end at the pixels (25) of the detector array (70) in a geometric arrangement which differs from that of the input, and
- wherein dichroic mirrors (71) and redirection elements (72) are provided in the light direction downstream of optical fibres and upstream of the pixels (25) of a detector array (70) in a manner such that wavelengths differing at least in part are incident on adjacent pixels (25).

3. Microscope according to Claim 1 or 2, **characterized in that** the optical fibres are multi-mode optical fibres.

4. Microscope according to Claim 1, 2 or 3, **characterized in that** the optical fibres (21) extend from the input (22) to the output (23) such that adjacent optical fibres (21) at the output (23) are also adjacent at the input (22) to minimize radiation-intensity-dependent crosstalk of pixels (25) which lie next to one another.

5. Microscope according to any of the above claims, **characterized in that** the imaging device (4) comprises a zoom lens (27), arranged upstream of the detection plane (18) in the imaging direction, for adapting the size of the single image (17) to that of the detector device (19) .

6. Microscope according to Claim 5, **characterized in that** the illumination device (3) and the imaging device (4) share a scanning device (10), with the result that the illumination device (3) illuminates the sample (2) with a diffraction-limited point spot or line spot which coincides with the spot (14) imaged by the imaging device, wherein the zoom lens (27) is arranged such that it is also a constituent part of the illumination device (3) .

7. Method for high-resolution scanning microscopy of a sample (2), in which
- the sample (2) is illuminated,
- at least one point spot or line spot (14), which is guided to scan over the sample (2), is imaged into a single image (17), wherein the spot (14) is imaged in a diffraction-limited manner into the single image (17) and the single image (17) is static in a detection plane (18),
- the single image (17) is captured for various scanning positions with a spatial resolution such that a diffraction structure of the single image (17) is captured,
- the diffraction structure of the single image (17) is evaluated for each scanning position and an image of the sample (2) is generated having a resolution which is increased beyond the diffraction limit, wherein
- a detector array (47) which has pixels (25) and is larger than the single image (17) is provided, and
- radiation of the single image from the detection plane (18) is redistributed in a non-imaging manner over the pixels (25) of the detector array (47),
**characterized by** at least two redistribution elements on which detection light is incident in a parallel manner, and wherein radiation from the at least two redistribution elements passes to the pixels (25) of the detector array (47), wherein the redistribution elements each comprise a bundle (43, 44, 48, 49, 56, 57, 58, 59) of optical fibres which has an input and has an output at which the optical fibres end at the pixels (25) of the detector array (47) in a geometric arrangement which differs from that of the input, and wherein at least one colour splitter (40) for generating at least two partial beam paths with at least partially differing spectral characteristics is arranged in the detection beam path in a manner such that the detection light differs at least in part with respect to its spectral composition.

8. Method according to Claim 7, **characterized in that** the optical fibres are multi-mode optical fibres.

9. Method according to Claim 7 or 8, **characterized in that** the optical fibres (21) are guided from the input (22) to the output (23) such that adjacent optical fibres (21) at the output (23) are also adjacent at the input (22) to minimize radiation-intensity-dependent crosstalk of pixels (25) which lie next to one another.

10. Method according to Claim 7, 8 or 9, **characterized in that** the bundle (20) of optical fibres (21) and the detector array (24) are calibrated by virtue of the fact that radiation is incident individually on each optical fibre (21), interfering signals in pixels (25) which are assigned to adjacent optical fibres (21) at the output (23) are captured, and a calibration matrix is created with which radiation-intensity-dependent crosstalk of pixels (25) which lie next to one another is corrected during microscopy of the sample (2).

11. Method according to any of Claims 7 to 10, **characterized in that** a movement direction in which the point spot or line spot (14) is scanned is determined by virtue of the fact that signals of individual pixels (25) of the detector array (24) are evaluated by means of cross-correlation.

12. Method according to any of Claims 7 to 11, **characterized in that** changes in the sample (2) are captured by virtue of the fact that a change in the diffraction-limited single image (17) over time is determined and evaluated when the point spot or line spot (14) is static in the sample (2).

13. Microscope according to Claim 1 or according to any of Claims 1 to 6, where these refer back to Claim 1, **characterized by** one or more of the following designs:
- wherein detection light from the redistribution elements passes to regions of the detector array which lie next to one another,
- wherein detection light from at least two redistribution elements is incident on at least one pixel of the detector array,
- wherein both detection light of a filtered spectral composition and also detection light without spectral filtering is incident on pixels of the detector array,
- wherein detection light is incident on more pixels for detection without spectral filtering than for spectrally filtered detection,
- wherein the pixels with the aforementioned incidence of light are arranged next to one another and/or light from at least two redistribution elements is incident on the pixels,
- wherein a switching element for allowing unfiltered detection light to be incident on a redistribution element is provided in the detection beam path.

14. Method according to any of Claims 7 to 11, **characterized by** one or more of the following designs:
- wherein both detection light of a filtered spectral composition and also detection light without spectral filtering is incident on pixels of the detector array,
- wherein detection light is incident on more pixels for detection without spectral filtering than for spectrally filtered detection,
- wherein the pixels with the aforementioned incidence of light are arranged next to one another and/or light from at least two redistribution elements is incident on the pixels,
- wherein a switching element for allowing unfiltered detection light to be incident on a redistribution element is provided in the detection beam path.

## Revendications

1. Microscope destiné à la microscopie à balayage à haute résolution d'un échantillon (2), ledit microscope comprenant
- un dispositif d'éclairage (3) destiné à éclairer l'échantillon (2),
- un dispositif de reproduction (4) destiné à balayer l'échantillon (2) avec au moins un spot ponctuel ou linéaire (14) et à reproduire le spot ponctuel ou linéaire (14) dans une image individuelle statique à diffraction limitée (17) dans un plan de détection (18),
- un dispositif de détection (19) destiné à détecter l'image individuelle (17) dans le plan de détection (18) pour différentes positions de balayage avec une résolution locale,
- un dispositif d'évaluation (C) destiné à évaluer une structure de diffraction de l'image individuelle (17) pour les positions de balayage à partir de données du dispositif de détection (19) et à générer une image de l'échantillon (17) qui a une résolution qui est relevée au-dessus de la limite de diffraction, le dispositif de détection (19) comportant :
- un réseau de détecteurs (47) qui comporte des pixels (25) et qui est plus grand que l'image individuelle (17), et
- un élément de redistribution non reproductive qui est disposé en amont du réseau de détecteurs (47) et qui distribue le rayonnement du plan de détection (18) de manière non reproductive sur les pixels (25) du réseau de détecteurs (47),
**caractérisé par** au moins deux éléments de redistribution qui sont exposés en parallèle à une lumière de détection, un rayonnement qui provient des au moins deux éléments de redistribution parvenant aux pixels (25) du réseau de détecteurs (47), les éléments de redistribution comprenant chacun un faisceau (43, 44, 48, 49, 56, 57, 58, 59) de fibres optiques qui comporte une entrée et une sortie au niveau de laquelle les fibres optiques se terminent au niveau des pixels (25) du réseau de détecteurs (47) suivant une disposition géométrique qui est différente de celle de l'entrée et
- au moins un séparateur chromatique (40) étant disposé dans le trajet de rayons de détection afin de générer au moins deux sous-trajets de rayons ayant des caractéristiques spectrales au moins partiellement différentes de sorte que la lumière de détection dans les éléments de redistribution diffère au moins partiellement en ce qui concerne sa composition spectrale.

2. Microscope destiné à la microscopie à balayage à haute résolution d'un échantillon (2), ledit microscope comprenant
- un dispositif d'éclairage (3) destiné à éclairer l'échantillon (2),
- un dispositif de reproduction (4) destiné à balayer l'échantillon (2) avec au moins un spot ponctuel ou linéaire (14) et à reproduire le spot ponctuel ou linéaire (14) dans une image individuelle stationnaire à diffraction limitée (17) dans un plan de détection (18),
- un dispositif de détection (19) destiné à détecter l'image individuelle (17) dans le plan de détection (18) pour différentes positions de balayage avec une résolution locale,
- un dispositif d'évaluation (C) destiné à évaluer une structure de diffraction de l'image individuelle (17) pour les positions de balayage à partir de données du dispositif de détection (19) et à générer une image de l'échantillon (17) qui a une résolution qui est relevée au-dessus de la limite de diffraction, le dispositif de détection (19) comportant :
- un réseau de détecteurs (70) qui comporte des pixels (25) et qui est plus grand que l'image individuelle (17), et
- un élément de redistribution non reproductive qui est disposé en amont du réseau de détecteurs (70) et qui distribue le rayonnement qui provient du plan de détection (18) de manière non reproductive sur les pixels (25) du réseau de détecteurs (70),
**caractérisé en ce que** l'élément de redistribution comprend un faisceau (69) de fibres optiques ayant une entrée et une sortie au niveau de laquelle les fibres optiques se terminent aux pixels (25) du réseau de détecteurs (70) suivant une disposition géométrique différente de celle de l'entrée et
- des miroirs dichroïques (71) et des éléments de déflexion (72) étant prévus en aval des fibres optiques et en amont des pixels (25) d'un réseau de détecteurs (70) dans la direction de la lumière de telle sorte que les pixels adjacents (25) soient exposés à des longueurs d'onde au moins partiellement différentes.

3. Microscope selon la revendication 1 ou 2, **caractérisé en ce que** les fibres optiques sont des fibres optiques multi-modes.

4. Microscope selon la revendication 1, 2 ou 3, **caractérisé en ce que** les fibres optiques (21) s'étendent depuis l'entrée (22) jusqu'à la sortie (23) de telle sorte que des fibres optiques adjacentes (21) au niveau de la sortie (23) soient également adjacentes au niveau de l'entrée (22) afin de minimiser la diaphonie, dépendante de l'intensité du rayonnement, entre des pixels adjacents (25).

5. Microscope selon l'une des revendications précédentes, **caractérisé en ce que** le dispositif de reproduction (4) comporte une optique zoom (27) disposée en amont du plan de détection (18) dans la direction de reproduction et destinée à adapter la taille de l'image individuelle (17) à celle du dispositif de détection (19).

6. Microscope selon la revendication 5, **caractérisé en ce que** le dispositif d'éclairage (3) et le dispositif de reproduction (4) partagent un dispositif de balayage (10) de sorte que le dispositif d'éclairage (3) éclaire l'échantillon (2) avec un spot ponctuel ou linéaire à diffraction limitée qui coïncide avec le spot (14) reproduit par le dispositif de reproduction, l'optique zoom (27) étant disposée de telle sorte qu'elle fasse également partie du dispositif d'éclairage (3) .

7. Procédé de microscopie à balayage à haute résolution d'un échantillon (2), procédé dans lequel
- l'échantillon (2) est éclairé,
- au moins un spot ponctuel ou linéaire (14) qui balaie l'échantillon (2) est reproduit dans une image individuelle (17), le spot (14) étant reproduit dans l'image individuelle (17) avec une diffraction limitée et l'image individuelle (17) étant située de manière statique dans un plan de détection (18),
- l'image individuelle (17) est détectée avec une résolution locale pour différentes positions de balayage de façon à détecter une structure de diffraction de l'image individuelle (17),
- la structure de diffraction de l'image individuelle (17) est évaluée pour chaque position de balayage et une image de l'échantillon (2) est générée qui présente une résolution qui est relevée au-dessus de la limite de diffraction,
- un réseau de détecteurs (47) est prévu qui comporte des pixels (25) et qui est plus grand que l'image individuelle (17), et
- le rayonnement de l'image individuelle depuis le plan de détection (18) est redistribué de manière non reproductive sur les pixels (25) du réseau de détecteurs (47),
**caractérisé par** au moins deux éléments de redistribution qui sont exposés en parallèle à une lumière de détection, et le rayonnement qui provient des au moins deux éléments de redistribution parvenant aux pixels (25) du réseau de détecteurs (47), les éléments de redistribution comprenant chacun un faisceau (43, 44, 48, 49, 56, 57, 58, 59) de fibres optiques qui comporte une entrée et une sortie au niveau de laquelle les fibres optiques se terminent au niveau des pixels (25) du réseau de détecteurs (47) suivant une disposition géométrique différente de celle de l'entrée et au moins un séparateur chromatique (40) étant disposé dans le trajet de rayons de détection afin de générer au moins deux sous-trajets de rayons ayant des caractéristiques spectrales au moins partiellement différentes de sorte que la lumière de détection diffère au moins partiellement en ce qui concerne sa composition spectrale.

8. Procédé selon la revendication 7, **caractérisé en ce que** les fibres optiques sont des fibres optiques multi-modes.

9. Procédé selon la revendication 7 ou 8, **caractérisé en ce que** les fibres optiques (21) sont guidées depuis l'entrée (22) jusqu'à la sortie (23) de telle sorte que des fibres optiques adjacentes (21) au niveau de la sortie (23) soient également adjacentes au niveau de l'entrée (22) afin de minimiser la diaphonie, dépendante de l'intensité du rayonnement, entre des pixels adjacents (25).

10. Procédé selon la revendication 7, 8 ou 9, **caractérisé en ce que** le faisceau (20) de fibres optiques (21) et le réseau de détecteurs (24) sont étalonnés par des opérations selon lesquelles chaque fibre optique (21) est exposée individuellement à un rayonnement, un signal d'interférence est détecté dans des pixels (25) qui sont associés à des fibres optiques adjacentes (21) au niveau de la sortie (23), et une matrice d'étalonnage est établie qui permet de corriger la diaphonie, dépendante de l'intensité du rayonnement, entre des pixels adjacents (25) lors de la microscopie de l'échantillon (2).

11. Procédé selon l'une des revendications 7 à 10, **caractérisé en ce qu'**une direction de déplacement du balayage du spot ponctuel ou linéaire (14) est déterminée par une opération selon laquelle des signaux de pixels individuels (25) du réseau de détecteurs (24) sont évalués à l'aide d'une corrélation croisée.

12. Procédé selon l'une des revendications 7 à 11, **caractérisé en ce que** les variations dans l'échantillon (2) sont détectées par une opération selon laquelle une variation dans le temps est déterminée et évaluée dans l'image individuelle à diffraction limitée (17) dans le cas d'un spot ponctuel ou linéaire (14) statique dans l'échantillon (2).

13. Microscope selon la revendication 1 ou selon l'une des revendications 1 à 6, dans la mesure où elles se rapportent à la revendication 1, **caractérisé par** une ou plusieurs des affirmations suivantes :
- la lumière de détection qui provient des éléments de redistribution parvenant à des zones adjacentes du réseau de détecteurs,
- au moins un pixel du réseau de détecteurs étant exposé à une lumière de détection qui provient d'au moins deux éléments de redistribution,
- des pixels du réseau de détecteurs étant exposés aussi bien à une lumière de détection d'une composition spectrale filtrée qu'à une lumière de détection sans filtrage spectral,
- davantage de pixels étant exposés à la lumière de détection pour effectuer une détection sans filtrage spectral que pour effectuer une détection avec filtrage spectral,
- les pixels soumis à l'exposition mentionnée ci-dessus étant disposés de manière adjacente et/ou les pixels étant exposés à une lumière qui provient d'au moins deux éléments de redistribution,
- un élément de commutation étant prévu dans le trajet de rayons de détection pour permettre l'exposition d'un élément de redistribution à une lumière de détection non filtrée.

14. Procédé selon l'une des revendications 7 à 11, **caractérisé par** une ou plusieurs des affirmations suivantes :
- des pixels du réseau de détecteurs étant exposés aussi bien à une lumière de détection d'une composition spectrale filtrée qu'à une lumière de détection sans filtrage spectral,
- davantage de pixels étant exposés à la lumière de détection pour effectuer une détection sans filtrage spectral que pour effectuer une détection avec filtrage spectral,
- les pixels soumis à l'exposition mentionnée ci-dessus étant disposés de manière adjacente et/ou les pixels étant exposés à une lumière qui provient d'au moins deux éléments de redistribution,
- un élément de commutation étant prévu dans le trajet de rayons de détection pour permettre l'exposition d'un élément de redistribution à une lumière de détection non filtrée.
